# EUROPEAN PATENT SPECIFICATION

(11) **EP 2 854 209 B1**
(45) Date of publication and mention of the grant of the patent: **01.11.2017**
(21) Application number: 14186291.2
(22) Date of filing: 25.09.2014
(51) Int. Cl.: H01M 8/0282, H01M 8/0273, H01M 8/0286, H01M 8/0662, H01M 8/1246, H01M 8/12, H01M 8/124

(54) **Solid oxide fuel cell module and method for manufacturing a solid oxide fuel cell apparatus provided with same**
Festoxidbrennstoffzellenmodul und Verfahren zur Herstellung einer Festoxidbrennstoffzellenvorrichtung damit
Module de pile à combustible à oxyde solide et procédé de fabrication d'un appareil de pile à combustible à oxyde solide doté de celui-ci

(30) Priority: 27.09.2013 JP 2013200893
(43) Date of publication of application: 01.04.2015
(73) Proprietor: Toto Ltd., Fukuoka 802-8601 (JP)
(72) Inventor: Watanabe, Naoki, Kitakyushu-shi, Fukuoka 8028601 (JP); Isaka, Nobuo, Kitakyushu-shi, Fukuoka 8028601 (JP); Hoshiko, Takuya, Kitakyushu-shi, Fukuoka 8028601 (JP); Sato, Masaki, Kitakyushu-shi, Fukuoka 8028601 (JP); Tanaka, Shuhei, Kitakyushu-shi, Fukuoka 8028601 (JP); Ando, Shigeru, Kitakyushu-shi, Fukuoka, Fukuoka 8028601 (JP); Okamoto, Osamu, Kitakyushu-shi, Fukuoka 8028601 (JP); Furuya, Seiki, Kitakyushu-shi, Fukuoka 8028601 (JP); Momiyama, Yutaka, Kitakyushu-shi, Fukuoka 8028601 (JP); Hayama, Kiyoshi, Kitakyushu-shi, Fukuoka 8028601 (JP)
(74) Representative: Witte, Weller & Partner Patentanwälte mbB

(56) References cited:
- EP-A1- 2 819 230
- JP-B- 3 894 860
- US-A1- 2002 155 227
- US-A1- 2009 197 135
- US-A1- 2009 233 154

## Description

### Technical Field

0001 The present invention pertains to a solid oxide fuel cell module, and more particularly to a solid oxide fuel cell module for generating electricity by supplying fuel and oxidant gas to multiple housed fuel cells, and to a method for manufacturing a solid oxide fuel cell apparatus provided with same.

### Background Art

0002 Solid oxide fuel cells ("SOFCs" below) are fuel cells which operate at a relatively high temperature in which, using an oxide ion-conducting solid electrolyte as electrolyte, with electrodes attached to both sides thereof, fuel gas is supplied to one side thereof and oxidizer gas (air, oxygen, or the like) is supplied to the other side thereof.

0003 Fuel flow paths for supplying fuel to fuel cells, oxidant gas flow paths for supplying oxidant gas such as air, and the like are built into solid oxide fuel cell apparatuses, and particularly fuel cell modules housing fuel cells. Normally these flow paths comprise multiple constituent parts, and a flow path is formed by joining together each of the constituent parts. Because a solid oxide fuel cell normally operates at high temperatures of 600 to 1000°C, each constituent part must be joined so as to withstand such high temperatures. In addition, the joined portions of each constituent part constituting the fuel flow path and the oxidant gas flow path must be airtight.

0004 Therefore at the joining portions where airtightness is required between constituent parts in the fuel cell module, methods were adopted such as affixing those constituent parts mechanically with bolts or the like, then flowing glass in paste form into the joining portions.

In the fuel cells set forth in Japanese Patent 3894860 (Patent Document 1) and Japanese Published Unexamined Patent Application H.06-215782 (Patent Document 2), a description is given whereby joining portions between constituent parts inside a fuel cell module are adhered using ceramic adhesive.

### Prior Art References

0005

### Patent Documents

Patent Document 1: JP 3894860
Patent Document 2: JP H06-215782

### Summary of the Invention

### Problems the Invention Seeks to Resolve

0006 However, in an arrangement whereby airtightness is secured by flowing glass in a paste form into joining portions after mechanically affixing constituent parts, two steps are needed for joining a single location, and this increases the number of manufacturing steps, leading to the problem of increased manufacturing costs.

In addition, when constituent parts are affixed using bolts inside a fuel cell module, the chrome component vaporizes from the bolts when exposed to high temperatures, causing chrome poisoning of the fuel cells, which leads to degradation of the cells. The problem can also arise that when sealing is done with glass to achieve airtightness at joining portions, boron vaporizes from the glass causing degradation of the fuel cells by adhering thereto.

0007 On the other hand, with the adhesion method using the ceramic adhesive set forth in Japanese Patent 3894860 and Japanese Published Unexamined Patent Application H6-215782, the aforementioned types of degradation to the fuel cells can be avoided. The problem for conventional joints using ceramic adhesive, however, has been that a reliable seal could not be made between constituent parts at the same time that constituent parts were affixed to one another.

0008 I.e., because solvents such as water vaporize when a ceramic adhesive is dried after being applied, volume shrinks, and unless this shrinkage is skillfully controlled, peeling and excessive cracking associated with shrinkage occurs in the ceramic adhesive layer after hardening. When such peeling or cracking does occur in the ceramic adhesive layer, sufficient sealing properties cannot be secured in those joint portions even though sufficient adhesion strength may be obtained between constituent parts. To compensate for these sealing defects, it has been proposed to coat the top of the ceramic adhesive layer with glass after adhesion (Japanese Patent 3894860, Paragraph 0029). However, when a ceramic adhesive layer is coated with glass, the number of manufacturing steps increases and the problem of boron evaporation from the glass occurs, eliminating the advantage of using the ceramic adhesive.

0009 Cracks in the ceramic adhesive layer are also prone to occur when adhered ceramic adhesive is rapidly dried. It is therefore possible to avoid cracking by natural drying of adhered ceramic adhesive at room temperature. However, when ceramic adhesive is dried naturally, an extremely long period of time is required before sufficient adhesion strength can be obtained at joint portions, and during that time product cannot be moved to the next manufacturing step. In general, because a very large number of manufacturing steps is required to assemble a solid oxide fuel cell apparatus, adhesion by ceramic adhesive is completely impractical for industrial applications. Although the use of ceramic adhesives in the assembly of solid oxide fuel cell apparatuses is set forth in patent documents, the fact they have not been put to practical use is believed to result from the causes described above.

0010 In addition, the present inventors have discovered the new technical problem that when a solid oxide fuel cell apparatus is assembled using ceramic adhesive, then even if the ceramic adhesive hardens to a strength sufficient to withstand practical use and is also able to secure sufficient airtightness for practical use, airtightness in the adhered parts is lost when the fuel cell apparatus is first operated and exposed to high temperatures. I.e., even in a state whereby adhered ceramic adhesive is hardened and sufficient airtightness and adhesive strength are obtained, small amounts of moisture or other evaporable solvents remain within the hardened ceramic adhesive layer. In particular, when residual moisture or solvents remain in large amounts in a concentrated form internally, the hardened ceramic adhesive layer is heated at an extremely high speed to temperatures far higher than the temperatures at the time of drying and hardening, therefore residual moisture or solvent expands volumetrically and evaporates, at which point this expansion, etc. acts to break open weak portions of the surface part of the already hardened ceramic adhesive layer, creating new cracks. The cause of such losses in airtightness occurring during practical use was ascertained by the inventors.

0011 That is, when ceramic adhesive is used for the assembly of solid oxide fuel cell apparatuses, the fuel cell apparatus cannot withstand the temperature rise in the startup step given the state of drying and hardening generally used on ceramic adhesives. To reduce residual moisture or solvents in the interior of the ceramic adhesive layer to a state such that it can withstand the temperature rise during the startup step requires additional time for slow and sufficient drying to occur. Given these causes, extremely long times are required for the assembly of solid oxide fuel cell apparatuses in which ceramic adhesives are used, making their practical use extremely difficult.

0012 Therefore the invention has the object of providing a solid oxide fuel cell module and solid oxide fuel cell apparatus manufacturing method provided with same, in which ceramic adhesive is used to hermetically join constituent parts in the fuel cell module.

### Means for Resolving Problems

0013 In order to resolve the above-described problems, the invention is a method for manufacturing a solid oxide fuel cell apparatus in which fuel and oxidant gas are supplied to multiple fuel cells housed within a fuel cell module to generate electricity, comprising steps of: an adhesive application step for applying ceramic adhesive between different parts of the solid oxide fuel cell apparatus so that an airtight flow path for guiding fuel or oxidant gas within the fuel cell module is fabricated; and a drying and hardening step for drying and hardening the applied ceramic adhesive; wherein the drying and hardening step includes steps of: a workable hardening step for hardening the applied ceramic adhesive at a predetermined first temperature; and a solvent elimination and hardening step carried out after multiple repetitions of the adhesive application step and the workable hardening step; wherein the solvent elimination and hardening step further removes solvent remaining within the ceramic adhesive hardened in each of the workable hardening steps to further harden the ceramic adhesive by raising to a second temperature, higher than the first temperature and approximately equal to the temperature of the fuel cells during electrical generation by the completed solid oxide fuel cell apparatus and the method further comprising steps of: a second fitting step for assembling additional constituent parts to a fuel cell module assembly on which the solvent elimination and hardening step has been completed; a second adhesive application step for applying ceramic adhesive to constituent parts assembled in the second fitting step; and a second drying and hardening step for drying and hardening ceramic adhesive applied in the second adhesive application step; wherein the constituent parts assembled in the second fitting step include at least one constituent part unable to withstand the second temperature, and the second drying and hardening step is executed by raising the temperature to a predetermined third temperature lower than the second temperature.

0014 In the invention thus constituted, ceramic adhesive is applied in the adhesive application step to the joining portions of constituent parts so that a pathway guiding fuel or oxidant gas is formed in an airtight manner inside the fuel cell module. In the workable hardening step of the drying and hardening step, adhered ceramic adhesive is hardened at a predetermined first temperature to a state in which the next manufacturing step can be implemented. The solvent elimination and hardening step of the drying and hardening step is performed after multiple repetitions of the adhesive application step and the workable hardening step; solvent remaining within the ceramic adhesive is further removed and further hardened from ceramic adhesive hardened in each of the workable hardening steps by raising to a second temperature, higher than a first temperature and approximately equal to the temperature of the fuel cells during electrical generation by a completed solid oxide fuel cell apparatus.

0015 In the invention thus constituted, ceramic adhesive applied in the adhesive application step is hardened in the workable hardening steps. After the end of the workable hardening step, the ceramic adhesive is hardened to the point that the next manufacturing step can be implemented, but cracks can develop when the solid oxide fuel cell apparatus is operated after being assembled. Thus the next manufacturing step can be implemented in the workable hardening step, but cracks result when the temperature is raised in approximately 2 hours to a typical electrical generation temperature of 600°C or greater in the startup step when transitioning to an electrical generation operation. I.e., even after the workable hardening step, a tiny amount of residual water and solvent remains in the ceramic adhesive, and a sudden volumetric expansion and vaporization occurs due to sudden heating of the solvent in this state, causing cracking to occur. However, in the workable hardening step, because it is sufficient to harden just enough to allow for working in the next step, drying and hardening times can be shortened, and a transition to the next step can be accomplished in a short time. Because this type of drying and hardening is used, there is no risk of slow vaporization of the solvent and the resulting cracking. This is a skillful use of the characteristics of ceramic adhesive. Specifically, this measure is the result of discovering that if the object is merely to obtain a hardened state sufficient for assembling a solid oxide fuel cell, this can be accomplished in an extremely short time using ceramic adhesive, while on the other hand to obtain strength and prevent cracking to secure airtightness, the drying and hardening time must be inordinately long.

0016 In addition, the adhesive application step and workable hardening step are repeated multiple times. Therefore the workable hardening step is applied multiple times to ceramic adhesive applied in the initial adhesive application step. Thus moisture or solvents inside ceramic adhesive hardened in the process of performing work in the next step are vaporized a little at a time over a long time period, and the hardened ceramic adhesive approaches a state able to withstand the temperature of electrical generation. Thus cracking, which tends to produce failures in airtightness, is reliably avoided, while work efficiency is increased. Moreover, after multiple repetitions of the adhesive application step and the workable hardening step, multiple joint portions hardened in each of the workable hardening steps are further dried by the solvent elimination and hardening step. Hardened moisture or solvents remaining in the ceramic adhesive are extremely small in volume due to the solvent elimination and hardening step, and the hardened ceramic adhesive is placed in a state able to withstand the temperatures of electrical generation.

0017 In the present invention, multiple joint portions hardened by multiple workable hardening steps are simultaneously dried until able to withstand the temperature rise of the startup step up until the start of electrical generation, therefore constituent parts can be joined in an airtight manner while reducing the time required for manufacturing. In addition, in the solvent elimination and hardening step, the temperature is raised to a second temperature, higher than the first temperature at which the workable hardening step is performed, and approximately equal to the temperature of the fuel cells during electrical generation by a completed solid oxide fuel cell apparatus. The risk of excessive cracking in the ceramic adhesive layer during the actual startup step can thus be reliably avoided.

0019 In the invention thus constituted, additional constituent parts are assembled in a second fitting step to a fuel cell module assembly on which the solvent elimination and hardening step has been completed, and assembled constituent parts are affixed with ceramic adhesive in a second adhesive application step and a second drying and hardening step. In the second drying and hardening step, the temperature is raised to a predetermined third temperature lower than the second temperature, therefore constituent parts unable to withstand the second temperature can be fitted in the second fitting step. Thus in the solvent elimination and hardening step, the assembly of parts with low heat resistance can also be completed using ceramic adhesive, thereby shortening the manufacturing process, while sufficiently securing airtightness in joining portions of constituent parts.

0020 In the present invention, the ceramic adhesive applied in the second adhesive application step is preferably used in joining portion not rising to the second temperature during the electrical generation operation of the completed solid oxide fuel cell apparatus.

0021 In the invention thus constituted, ceramic adhesive layers applied in the second adhesive application step are not exposed to temperatures present during electrical generation operation. Therefore the occurrence of excessive cracking in the ceramic adhesive layer can be reliably avoided in the actual startup step, even if ceramic adhesive hardened in the second drying and hardening step is not raised to the second temperature.

0022 In the present invention the fuel cell module preferably comprises a combustion catalyst for purifying exhaust gas, and ceramic adhesive applied in the second adhesive application step is used in the joining portion for joining different parts forming a flow path for guiding exhaust gas in the fuel cell module downstream from the combustion catalyst.

0023 In the invention thus constituted, the ceramic adhesive applied in the second adhesive application step is used on joining portions on the downstream side of the combustion catalyst, therefore no leaking of toxic exhaust gas to the outside occurs even if by some chance there is excessive cracking.

0024 In the present invention, in the solvent elimination and hardening step, a gas not containing oxygen is preferably supplied to the flow path for guiding fuel in the fuel cell module.

In the invention thus constituted, by supplying gas not containing oxygen to the flow path for guiding fuel in the solvent elimination and hardening step, the fuel electrode side of the fuel cells is filled with gas not containing oxygen, therefore oxidation of the fuel electrode can be prevented while the solvent elimination and hardening step is implemented at a high temperature.

0025 In the present invention, in the solvent elimination and hardening step, a hydrogen is preferably supplied to the flow path for guiding fuel in the fuel cell module, and inspection of leaks in the flow path for guiding fuel in the fuel cell module, or inspection of the reduction state of a fuel electrode of the fuel cells, is made by measuring an electromotive force generated in the fuel cells.

0026 In the invention thus constituted, the solvent elimination and hardening step is carried out at approximately the same temperature as the temperature during the electrical generation operation, and oxygen is supplied to the fuel cells, so the fuel cells are in a state capable of electrical generation. Therefore an inspection can be made for leakage within the fuel cell module and for the reduction state of fuel electrodes in the fuel cells simply by measuring the electromotive force generated by the fuel cells.

0027 The present invention is a solid oxide fuel cell module in which fuel and oxidant gas are supplied to multiple fuel cells housed within the fuel cell module to generate electricity, comprising: a high temperature section assembly including the multiple fuel cells and a generating chamber housing the same, and a temperature of the high temperature section assembly rising to approximately the same temperature as the multiple fuel cells during an electrical generation operation of the fuel cell module; and a low temperature section assembly placed on the outside of the high temperature section assembly, and including constituent parts unable to withstand the temperature of the multiple fuel cells during an electrical generation operation of the fuel cell module, and a temperature of the low temperature section assembly rising to a temperature below the temperature of the multiple fuel cells during an electrical generation of the fuel cell module; wherein the high temperature section assembly includes a fuel flow path comprised of constituent parts hermetically joined using ceramic adhesive; and the low temperature section assembly is joined to the high temperature section assembly using ceramic adhesive; and wherein a combustion catalyst for purifying exhaust gas is provided in the exhaust flow path, and the low temperature section assembly includes a catalyst heater for heating the combustion catalyst as a constituent part unable to withstand the temperature of the multiple fuel cells during the electrical generation operation of the fuel cell module.

0028 The invention thus constituted, comprises a generating chamber for housing fuel cells, whereby a low temperature section assembly including constituent parts unable to withstand the temperature of the multiple fuel cells during electrical generation operation is disposed on the outside of the high temperature section assembly, which rises to the temperature present during the electrical generation operation. The high temperature section assembly includes a fuel flow path comprised of constituent parts hermetically joined using ceramic adhesive, and the low temperature section assembly is joined to the high temperature section assembly using ceramic adhesive.

0029 In the invention thus constituted, a fuel flow path for which a high degree of airtightness is required is provided on the inside high temperature section assembly, therefore ceramic adhesive can be dried and hardened at a high temperature with the assembly of the high temperature section assembly completed. On the other hand, constituent parts unable to withstand high temperatures are included in the outside low temperature section assembly, and therefore a low temperature section assembly can be fitted onto the outside of an assembled high temperature section assembly, from which a high degree of airtightness is required, and the ceramic adhesive used for that fitting can be dried and hardened at a low temperature, thereby protecting constituent parts with a low tolerance for high temperatures from heat.

In the invention thus constituted, a catalyst heater for heating the combustion catalyst is included in the low temperature section assembly, therefore an exhaust flow path provided with a catalyst heater can be assembled using ceramic adhesive.

0030 The present invention preferably further comprises an exhaust flow path for guiding exhaust gas inside the fuel cell module, wherein the low temperature section assembly comprises an oxidant gas supply flow path positioned on the outside of the exhaust flow path.

0031 In the invention thus constituted, an oxidant gas supply flow path is provided on the low temperature section assembly, and an exhaust flow path is disposed on the inside thereof, therefore the exhaust flow path, which tends to reach high temperatures, can be cooled by oxidant gas flowing in the oxidant gas supply flow path. There is therefore no need to include the entire exhaust flow path in the high temperature section assembly, and design freedom can be expanded.

### Effect of the Invention

0034 Using the solid oxide fuel cell module and solid oxide fuel cell apparatus manufacturing method provided with same of the present invention, ceramic adhesive can be used to hermetically join constituent parts inside the fuel cell module.

### Brief Description of Figures

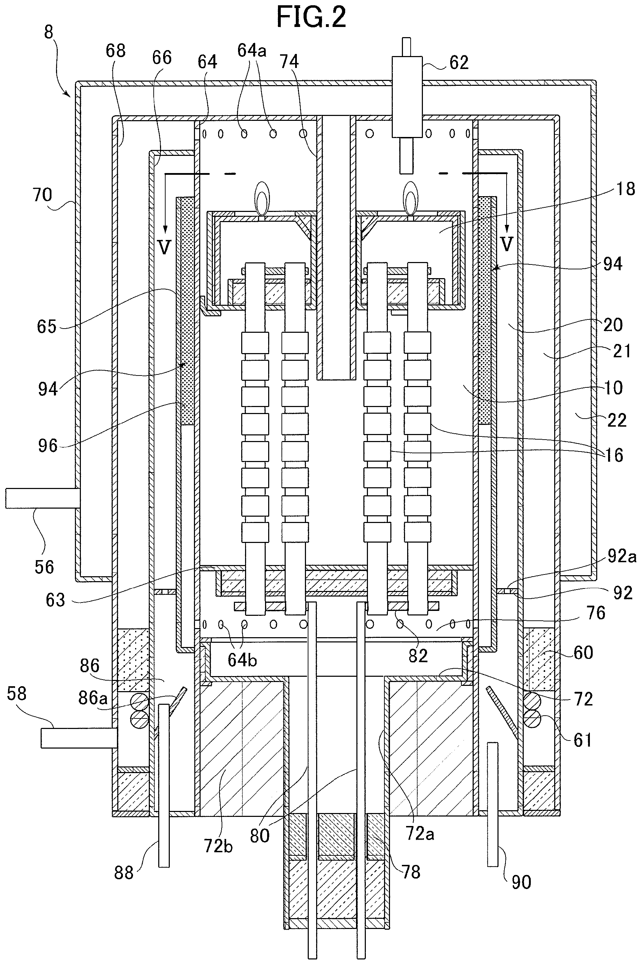

0035
Fig. 1
   An overview diagram showing a solid oxide fuel cell apparatus (SOFC) according to an embodiment of the present invention.
Fig. 2
   A cross section of an individual fuel cell housing vessel built into a solid oxide fuel cell apparatus according to an embodiment of the present invention.
Fig. 3
   A cross section showing an exploded view of the main members of an individual fuel cell housing vessel built into a solid oxide fuel cell apparatus according to an embodiment of the present invention.
Fig. 4
   A cross section showing an expanded view of the exhaust collector chamber part built into a solid oxide fuel cell apparatus according to an embodiment of the present invention.
Fig. 5
   A cross section through V-V in Fig. 2.
Fig. 6
   (a) A cross section showing an expanded view of the bottom end portion of the fuel cells on which the bottom end is used as a cathode; (b) a cross section showing an expanded view of the bottom end portion of fuel cells on which the bottom end is used as an anode.
Fig. 7
   A schematic diagram showing the manufacturing sequence for a solid oxide fuel cell apparatus according to an embodiment of the present invention.
Fig. 8
   A schematic diagram showing the manufacturing sequence for a solid oxide fuel cell apparatus according to an embodiment of the present invention.
Fig. 9
   A schematic diagram showing the manufacturing sequence for a solid oxide fuel cell apparatus according to an embodiment of the present invention.
Fig. 10
   A schematic diagram showing the manufacturing sequence for a solid oxide fuel cell apparatus according to an embodiment of the present invention.
Fig. 11
   A schematic diagram showing the manufacturing sequence for a solid oxide fuel cell apparatus according to an embodiment of the present invention.
Fig. 12
   A schematic diagram showing the manufacturing sequence for a solid oxide fuel cell apparatus according to an embodiment of the present invention.
Fig. 13
   A schematic diagram showing the manufacturing sequence for a solid oxide fuel cell apparatus according to an embodiment of the present invention.
Fig. 14
   A schematic diagram showing the manufacturing sequence for a solid oxide fuel cell apparatus according to an embodiment of the present invention.
Fig. 15
   A schematic diagram showing the manufacturing sequence for a solid oxide fuel cell apparatus according to an embodiment of the present invention.
Fig. 16
   A schematic diagram showing the manufacturing sequence for a solid oxide fuel cell apparatus according to an embodiment of the present invention.
Fig. 17
   A schematic diagram showing the manufacturing sequence for a solid oxide fuel cell apparatus according to an embodiment of the present invention.
Fig. 18
   A schematic diagram showing the manufacturing sequence for a solid oxide fuel cell apparatus according to an embodiment of the present invention.
Fig. 19
   A schematic diagram showing the manufacturing sequence for a solid oxide fuel cell apparatus according to an embodiment of the present invention.
Fig. 20
   A schematic diagram showing the manufacturing sequence for a solid oxide fuel cell apparatus according to an embodiment of the present invention.
Fig. 21
   A schematic diagram showing the manufacturing sequence for a solid oxide fuel cell apparatus according to an embodiment of the present invention.
Fig. 22
   A plan view of a cover member disposed on injected ceramic adhesive in a solid oxide fuel cell apparatus according to an embodiment of the present invention.
Fig. 23
   A perspective view showing the state in which a cover member is disposed on injected ceramic adhesive in a solid oxide fuel cell apparatus according to an embodiment of the present invention.
Fig. 24
   A flow chart showing the manufacturing sequence for a solid oxide fuel cell apparatus according to an embodiment of the present invention.
Fig. 25
   A cross section showing an expanded view of the portion of fuel cells adhered to a collection chamber bottom member in a solid oxide fuel cell apparatus according to an embodiment of the present invention.
Fig. 26
   A graph showing an example of temperature control inside a drying oven during the workable hardening step and the solvent elimination and hardening step in a method for manufacturing a solid oxide fuel cell apparatus according to an embodiment of the present invention.
Fig. 27
   A photograph showing an example of a case in which fuel cells are adhered using ceramic adhesive by a normal adhesion method.
Fig. 28
   A figure explaining a heating method in a solvent elimination and hardening step in a method for manufacturing a solid oxide fuel cell apparatus according to an embodiment of the present invention.
Fig. 29
   A flow chart showing the solvent elimination and hardening step and inspection procedure in a method for manufacturing a solid oxide fuel cell apparatus according to an embodiment of the present invention.
Fig. 30
   A figure showing the state of heating in a solvent elimination and hardening step in a method for manufacturing a solid oxide fuel cell apparatus according to an embodiment of the present invention.

### Embodiments of the Invention

0036 Next, referring to the attached drawings, we discuss a solid oxide fuel cell apparatus (SOFC) according to an embodiment of the present invention.

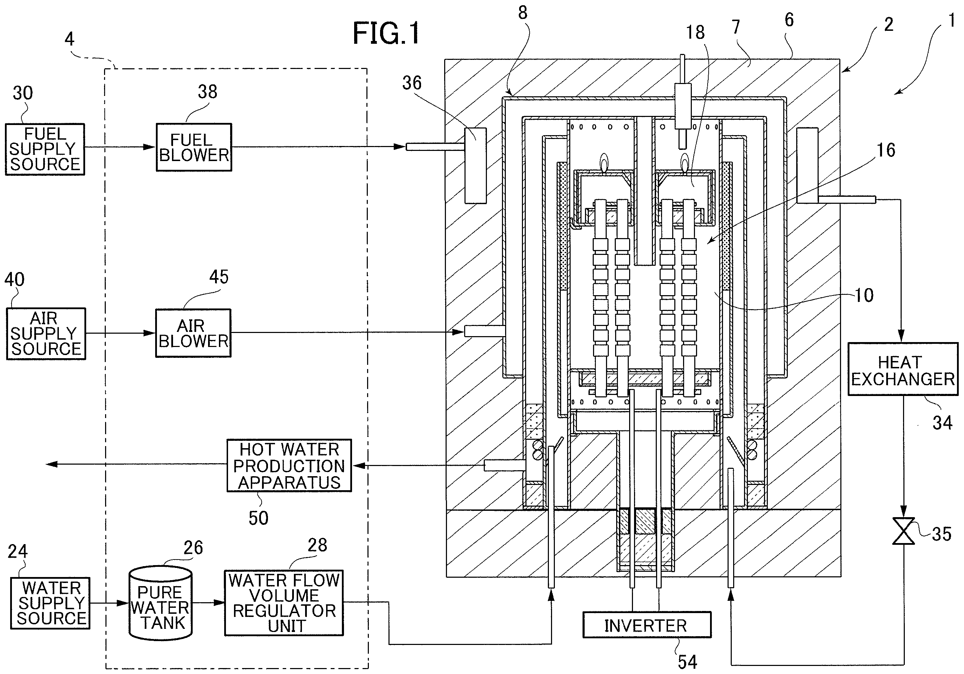

Fig. 1 is an overview diagram showing a solid oxide fuel cell (SOFC) apparatus according to an embodiment of the present invention. As shown in Fig. 1, the solid oxide fuel cell (SOFC) apparatus of this embodiment of the present invention is furnished with a fuel cell module 2 and an auxiliary unit 4.

0037 Fuel cell module 2 comprises a fuel cell housing container 8; is formed within this housing 6, mediated by thermal insulation 7. A generating chamber 10 is formed on the interior of this fuel cell housing container 8; multiple fuel cells 16 are concentrically disposed within this generating chamber 10, and the generating reaction between fuel gas and air, which is the oxidizing gas, is carried out by these fuel cells 16.

0038 An exhaust collection chamber 18 is attached to the top end of each individual fuel cell 16. Residual fuel (off-gas), unused for the generating reaction and remaining in each individual fuel cell 16, is collected in the exhaust collection chamber 18 attached to the top end and flows out of the multiple jet openings placed in the ceiling surface of exhaust collection chamber 18. Out flowing fuel is combusted in generating chamber 10 using remaining air not used for generation, thereby producing exhaust gas.

0039 Next, auxiliary unit 4 comprises pure water tank 26, which stores water from water supply source 24 and uses a filter to produce pure water, and water flow volume regulator unit 28 (a motor-driven "water pump" or the like), being a water supply apparatus, which regulates the flow volume of water supplied from this pure water tank. Also, auxiliary unit 4 comprises a fuel blower 38 (a motor-driven "fuel pump" or the like), being a fuel supply apparatus, for regulating the flow volume of hydrocarbon raw fuel gas supplied from fuel supply source 30, such as municipal gas.

0040 Note that raw fuel gas which is passed through fuel blower 38 is introduced into the interior of fuel cell housing container 8 through the desulfurizer 36, heat exchanger 34, and electromagnetic valve 35 in fuel cell module 2. The desulfurizer 36 is disposed in a ring shape around fuel cell housing container 8, and operates to remove sulfur from raw fuel gas. Heat exchanger 34 is provided to prevent degradation of electromagnetic valve 35 when high-temperature raw fuel gas heated in desulfurizer 36 flows directly into electromagnetic valve 35. Electromagnetic valve 35 is provided in order to stop the supply of raw fuel gas into fuel cell housing container 8.

0041 Auxiliary unit 4 comprises a generating air flow regulator unit 45 (a motor driven "air blower" or the like), being an oxidant gas supply apparatus, for regulating the flow volume of air supplied from air supply source 40.

0042 In addition, auxiliary unit 4 is equipped with a hot water production device 50 for recovering the heat in exhaust gas from fuel cell module 2. Tap water is supplied to hot water production device 50; this tap water is converted to hot water by the heat from exhaust gas, and is supplied to an external hot water tank, not show.

In addition, connected to fuel cell module 2 is an inverter 54, being a power extraction section (power conversion section) for supplying electricity generated by fuel cell module 2 to the outside.

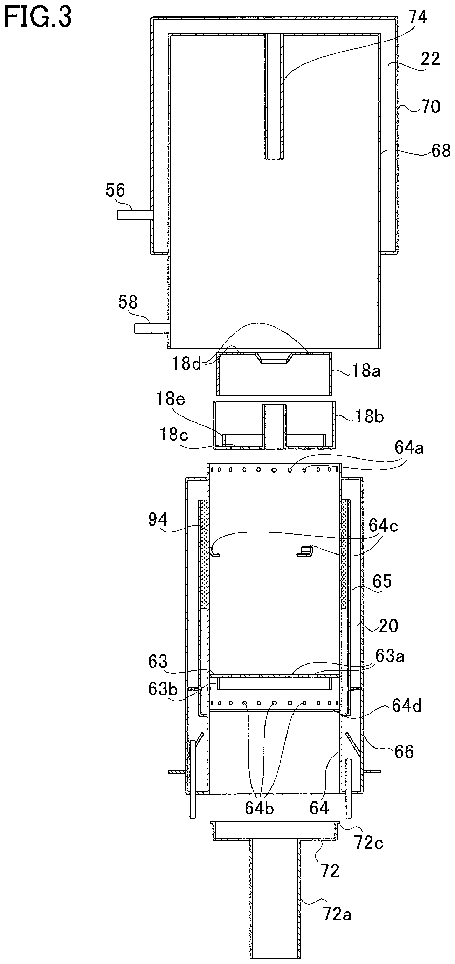

0043 Next, referring to Figs. 2 and 3, we explain the internal structure of a fuel cell housing container built into the fuel cell module of a solid oxide fuel cell (SOFC) according to an embodiment of the invention. Fig. 2 is a cross-section of a fuel cell housing container, and Fig. 3 is a cross-section showing exploded view of main members of a fuel cell housing container.

As shown in Fig. 2, multiple fuel cells 16 are concentrically arrayed in the space within fuel cell housing container 8, and fuel gas supply flow path 20, exhaust gas discharge flow path 21, and oxidant gas supply flow path 22 are concentrically arranged in that order so as to surround the periphery thereof. Here, exhaust gas discharge flow path 21 and oxidant gas supply flow path 22 function as an oxidant gas flow path for supplying/discharging oxidant gas.

0044 First, as shown in Fig. 2, fuel cell housing container 8 is an approximately cylindrical steel container, to the side surface of which are connected a oxidant gas introducing pipe 56, being an oxidant gas introduction port for supplying generating air, and exhaust gas exhaust pipe 58 for discharging exhaust gas. In addition, an ignition heater 62 for igniting residual fuel flowing out from exhaust collection chamber 18 protrudes from the top in surface of fuel cell housing container 8.

0045 As shown in Figs. 2 and 3, within fuel cell housing container 8, inside cylindrical member 64, external cylindrical member 66, inside cylindrical container 68, and external cylindrical container 70, being constituent members of the generating chamber, are disposed in that order starting from the inside so as to surround the periphery of exhaust collection chamber 18. The above-described fuel gas supply flow path 20, exhaust gas discharge flow path 21, and oxidant gas supply flow path 22 respectively constitute flow paths between the cylindrical members and cylindrical containers, wherein heat exchange is carried out between adjacent flow paths. I.e., exhaust gas discharge flow path 21 is disposed so as to surround fuel gas supply flow path 20, and oxidant gas supply flow path 22 is disposed so as to surround exhaust gas discharge flow path 21. The open space at the bottom end of fuel cell housing container 8 is blocked off by dispersion chamber bottom member 72, which forms the bottom surface of fuel gas dispersion chamber 76 for dispersing fuel into each individual fuel cell 16.

0046 The inside cylindrical member 64 is an approximately cylindrical hollow body, the top and bottom ends of which are open. First affixing member 63, being a dispersion chamber-forming plate, is welded in an airtight manner to the interior wall surface of inside cylindrical member 64. A fuel gas dispersion chamber 76 is defined by the bottom surface of this first affixing member 63, the inside wall surface of inside cylindrical member 64, and the top surface of dispersion chamber bottom member 72. Multiple insertion holes 63a, into which fuel cells 16 are inserted, are formed on first affixing member 63, and each individual fuel cell 16 is adhered to first affixing member 63 by ceramic adhesive, with the fuel cells 16 inserted into each of the insertion holes 63a. Thus in a solid oxide fuel cell apparatus 1 of the embodiment, ceramic adhesive is filled into the mutual joining portions between members constituting fuel cell module 2, and with hardening, each of the members is mutually joined in an airtight manner.

0047 External cylindrical member 66 is a cylindrical pipe disposed on the periphery of inside cylindrical member 64, formed in an approximately analogous shape to inside cylindrical member 64 so that a ring-shaped flow path is formed between external cylindrical member 66 and inside cylindrical member 64. In addition, an intermediate cylindrical member 65 is disposed between inside cylindrical member 64 and external cylindrical member 66. Intermediate cylindrical member 65 is a cylindrical pipe disposed between inside cylindrical member 64 and external cylindrical member 66, and a reforming section 94 is constituted between the outside circumferential surface of inside cylindrical member 64 and the inside circumferential surface of intermediate cylindrical member 65. Also, the ring-shaped space between the outer circumferential surface of intermediate cylindrical member 65 and the inner circumferential surface of external cylindrical member 66 functions as a fuel gas supply flow path 20. Therefore reforming section 94 and fuel gas supply flow path 20 receive the heat from combustion of residual fuel at the top end of exhaust collection chamber 18 in the fuel cells 16. The top end of inside cylindrical member 64 and top end of external cylindrical member 66 are joined in an airtight manner by welding, while the top end of fuel gas supply flow path 20 is closed off. Also, the bottom end of intermediate cylindrical member 65 and the outer peripheral surface of inside cylindrical member 64 are joined in an airtight manner by welding.

0048 Inside cylindrical container 68 is a cup-shaped member with a circular cross section disposed on the periphery of external cylindrical member 66, the side surface of which is formed in an approximately analogous shape to external cylindrical member 66, so that a ring-shaped flow path of an essentially fixed width is formed between inside cylindrical container 68 and external cylindrical member 66. This inside cylindrical container 68 is disposed so as to cover the open portion at the top end of inside cylindrical member 64. The ring-shaped space between the outer circumferential surface of external cylindrical member 66 and the inner circumferential surface of inside cylindrical container 68 functions as exhaust gas discharge flow path 21 (Fig. 2). This exhaust gas discharge flow path 21 communicates with the space on the inside of inside cylindrical member 64 through multiple small holes 64a provided on the top in surface of inside cylindrical member 64. An exhaust gas exhaust pipe 58, being an exhaust gas outflow opening, is connected to the bottom surface of inside cylindrical container 68, and exhaust gas discharge flow path 21 communicates with exhaust gas exhaust pipe 58.

0049 A combustion catalyst 60 and sheath heater 61 for heating same is disposed at the bottom portion of exhaust gas discharge flow path 21.

Combustion catalyst 60 is a catalyst filled into the ring-shaped space between the outer circumferential surface of external cylindrical member 66 and the inner circumferential surface of inside cylindrical container 68, above exhaust gas exhaust pipe 58. By passing through combustion catalyst 60, carbon monoxide is removed from exhaust gas descending the exhaust gas discharge flow path 21 and discharged from exhaust gas exhaust pipe 58.

Sheath heater 61 using electrical heater attached so as to surround the outer circumferential surface of external cylindrical member 66 underneath combustion catalyst 60. When solid oxide fuel cell apparatus 1 is started, combustion catalyst 60 is heated to an activation temperature by turning on electricity to sheath heater 61.

0050 External cylindrical container 70 is a cup-shaped member with a circular cross section disposed on the periphery of inside cylindrical container 68, the side surface of which is formed in an approximately analogous shape to inside cylindrical container 68, so that a ring-shaped flow path of an essentially fixed width is formed between external cylindrical container 70 and inside cylindrical container 68. The ring-shaped space between the outer circumferential surface of inside cylindrical container 68 and the inner circumferential surface of external cylindrical container 70 functions as oxidant gas supply flow path 22. Oxidant gas introducing pipe 56 is connected to the bottom end surface of external cylindrical container 70, and oxidant gas supply flow path 22 communicates with oxidant gas introducing pipe 56.

0051 Dispersion chamber bottom member 72 is an approximately plate-shaped member, affixed in an airtight manner with ceramic adhesive to the inside wall surface of inside cylindrical member 64. A fuel gas dispersion chamber 76 is thus constituted between first affixing member 63 and dispersion chamber bottom member 72. Also, insertion pipe 72a for the insertion of bus bars 80 (Fig. 2) is provided at the center of dispersion chamber bottom member 72. Bus bars 80, electrically connected to each individual fuel cell 16, are drawn out to the outside of fuel cell housing container 8 through this insertion pipe 72a. Ceramic adhesive is filled into insertion pipe 72a, thereby securing the airtightness of exhaust gas collection chamber 78. In addition, thermal insulation 72b (Fig. 2) is disposed around the periphery of insertion pipe 72a.

0052 A circular cross section oxidant gas jetting pipe 74 for jetting generating air is attached so as to hang down from the ceiling surface of inside cylindrical container 68. This oxidant gas jetting pipe 74 the extends in the vertical direction on the center axial line of inside cylindrical container 68, and each individual fuel cell 16 is disposed on concentric circles around oxidant gas jetting pipe 74. By attaching the top end of oxidant gas jetting pipe 74 to the ceiling surface of inside cylindrical container 68, oxidant gas supply flow path 22, formed between inside cylindrical container 68 and external cylindrical container 70, is made to communicate with oxidant gas jetting pipe 74. Air supplied via oxidant gas supply flow path 22 is jetted downward from the tip of oxidant gas jetting pipe 74, hitting the top surface of first affixing member 63 and spreading to the entire interior of generating chamber 10.

0053 Fuel gas dispersion chamber 76 is a cylindrical airtight chamber, constituted between first affixing member 63 and dispersion chamber bottom member 72, on the top surface of which each individual fuel cell 16 is closely arrayed. The inside fuel electrode of each individual fuel cell 16 attached to the top surface of first affixing member 63 communicates with the interior of fuel gas dispersion chamber 76. The bottom end of each individual fuel cell 16 penetrates the insertion holes 63a in first affixing member 63 and protrudes into fuel gas dispersion chamber 76, so that each individual fuel cell 16 is affixed by adhesion to first affixing member 63.

0054 As shown in Fig. 2, multiple small holes 64b are formed in inside cylindrical member 64 below first affixing member 63. The space between the outer perimeter of inside cylindrical member 64 and the inner perimeter of intermediate cylindrical member 65 communicates with the inside of fuel gas dispersion chamber 76 through multiple small holes 64b. Supplied fuel first rises through the space between the inside perimeter of external cylindrical member 66 and the outside perimeter of intermediate cylindrical member 65, then descends through the space between the outside perimeter of inside cylindrical member 64 and the inside perimeter of intermediate cylindrical member 65, flowing into fuel gas dispersion chamber 76 through the multiple small holes 64b. Fuel gas which has flowed into fuel gas dispersion chamber 76 is distributed to each individual fuel cell 16 attached to the ceiling surface of fuel gas dispersion chamber 76 (first affixing member 63).

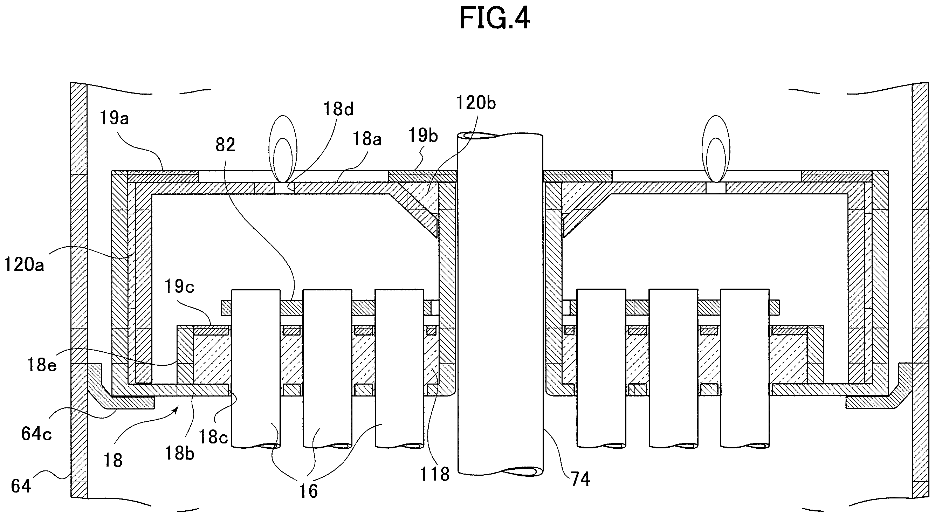

0055 In addition, the bottom ends of each individual fuel cell 16 protruding into fuel gas dispersion chamber 76 are electrically connected to bus bars 80 inside fuel gas dispersion chamber 76, and electoral power is extracted to the outside through insertion pipe 72a. Bus bars 80 are elongated metal conductors for extracting power produced by each individual fuel cell 16 to the outside of fuel cell housing container 8, affixed to dispersion chamber bottom member 72 insertion pipe 72a through insulator 78. Bus bars 80 are electrically connected to an power collector 82 attached to each individual fuel cell 16 on the interior of fuel gas dispersion chamber 76. Bus bars 80 are connected to inverter 54 (Fig. 1) on the exterior of fuel cell housing container 8. Note that power collector 82 is also attached to the top and portions of each individual fuel cell 16 protruding into exhaust collection chamber 18 (Fig. 4). Multiple fuel cells 16 are electrically connected in parallel by these top and bottom end electrical power collectors 82, and multiple sets of parallel-connected fuel cells 16 are electrically connected in series, and both ends of these series connections are connected to the respective bus bars 80.

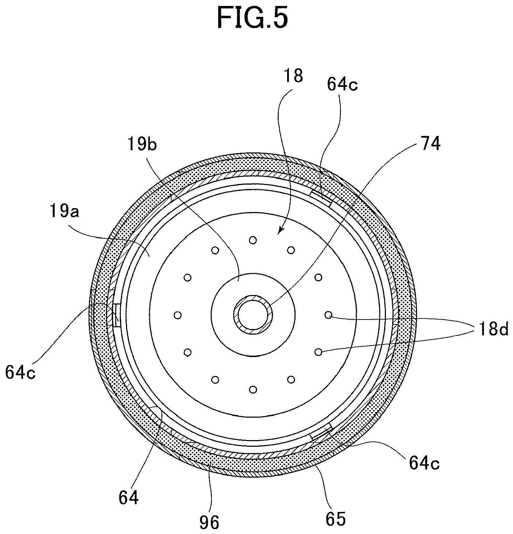

0056 Next, referring to Figs. 4 and 5, we explain the constitution of the exhaust collection chamber.

Fig. 4 is a cross-section showing an expanded view of part of the exhaust collection chamber, and Fig. 5 is a cross-section through V-V in Fig. 2.

As shown in Fig. 4, exhaust collection chamber 18 is a chamber with a doughnut-shaped cross-section attached to the top end of each individual fuel cell 16; oxidant gas jetting pipe 74 penetrates and extends at the center of this exhaust collection chamber 18.

0057 As shown in Fig. 5, three stays 64c are attached at equal spacing to the inside wall surface of inside cylindrical member 64 to support exhaust collection chamber 18. As shown in Fig. 4, stays 64c are small tabs of bent thin metal plate; by mounting exhaust collection chamber 18 on each of the stays 64c, exhaust collection chamber 18 is positioned concentrically with inside cylindrical member 64. Thus the gap between the outside circumferential surface of exhaust collection chamber 18 and the inside circumferential surface of inside cylindrical member 64, and the gap between the inside circumferential surface of exhaust collection chamber 18 and the outside circumferential surface of oxidant gas jetting pipe 74 are made uniform around the entire circumference (Fig. 5).

0058 Exhaust collection chamber 18 is constituted by joining collection chamber upper member 18a and collection chamber lower member 18b in an airtight manner.

Collection chamber lower member 18b is a round plate shaped member open at the top, at the center of which a cylindrical portion is provided to permit the penetration of oxidant gas jetting pipe 74.

Collection chamber upper member 18a is a round plate shaped member open at the bottom, at the center of which an opening is provided to permit the penetration of oxidant gas jetting pipe 74. Collection chamber upper member 18a has a shape capable of insertion into the doughnut shaped cross-sectional region which opens at the top of collection chamber lower member 18b.

0059 Ceramic adhesive is filled into and hardened in the gap between the inner circumferential surface of the wall surrounding collection chamber lower member 18b and the outer circumferential surface of collection chamber upper member 18a, assuring airtightness in this joining portion. A large diameter seal 19a is disposed on the ceramic adhesive layer formed by the ceramic adhesive filled into this joint portion, covering the ceramic adhesive layer. The large diameter seal 19a is a ring-shaped thin plate, disposed to cover the filled-in ceramic adhesive layer after the ceramic adhesive is filled, and affixed to exhaust collection chamber 18 by the hardening of the adhesive.

0060 On the other hand, ceramic adhesive is also filled in and hardened between the outside circumferential surface of the cylindrical portion at the center of collection chamber lower member 18b and the edge of the opening portion at the center of collection chamber upper member 18a, assuring the airtightness of this joint portion. A small diameter seal 19b is disposed on the ceramic adhesive layer formed by the ceramic adhesive filled into this joint portion, covering the ceramic adhesive layer. The small diameter seal 19b is a ring-shaped thin plate, disposed to cover the filled-in ceramic adhesive layer after the ceramic adhesive is filled, and affixed to exhaust collection chamber 18 by the hardening of the adhesive.

0061 Multiple insertion holes 18c are formed on the bottom surface of collection chamber lower member 18b. The top ends of each individual fuel cell 16 respectively penetrate each of the insertion holes 18c, and each individual fuel cell 16 penetrate each of the insertion holes 18c. Ceramic adhesive is flowed onto the bottom surface of collection chamber lower member 18b, which is penetrated by fuel cells 16; hardening of the adhesive fills in the gap between the outer perimeter of each individual fuel cell 16 and the insertion holes 18c in an airtight manner and results in the affixing of each individual fuel cell 16 to collection chamber lower member 18b.

0062 Furthermore, round, thin plate cover member 19c is disposed on the ceramic adhesive flowed into the bottom surface of collection chamber lower member 18b and affixed to collection chamber lower member 18b by the hardening of the ceramic adhesive. Multiple insertion holes are formed in cover member 19c at the same positions as each of the insertion holes 18c in collection chamber lower member 18b, and the top end of each individual fuel cell 16 penetrate and extend through these ceramic adhesive layer and cover member 19c.

0063 At the same time, multiple jet openings 18d for jetting collected fuel gas are formed in the ceiling surface of exhaust collection chamber 18 (Fig. 5). Each of the jet openings 18d is disposed in a circle on collection chamber upper member 18a. Fuel remaining unused for electrical generation flows out from the top end of each individual fuel cell 16 into exhaust collection chamber 18, and fuel collected inside exhaust collection chamber 18 flows out from jet openings 18d, where it is combusted.

0064 Next, referring to Fig. 2, we explain the structure for reforming raw fuel gas supplied from fuel supply source 30.

First, vaporization section 86 for vaporizing water for use in steam reforming is provided at the bottom portion of fuel gas supply flow path 20 formed between inside cylindrical member 64 and external cylindrical member 66. Vaporization section 86 comprises ring-shaped inclined plate 86a attached to the lower inside perimeter of external cylindrical member 66, and fuel gas flow path 88. Also, vaporization section 86 is disposed below oxidant gas introducing pipe 56 for introducing generating air, and above exhaust gas exhaust pipe 58 for discharging exhaust gas. Ring-shaped inclined plate 86a is a metal thin plate formed a ring shape, the outer circumferential edge of which is attached to the inside wall surface of external cylindrical member 66. At the same time, the inside perimeter edge of ring-shaped inclined plate 86a is positioned above the outside perimeter edge thereof, and a gap is provided between the inside perimeter edge of inclined plate 86a and the outside wall surface of inside cylindrical member 64.

0065 Water supply pipe 88 is a pipe extending vertically within fuel gas supply flow path 20 from the bottom end of inside cylindrical member 64; water for steam reforming supplied from water flow volume regulator unit 28 is supplied to vaporization section 86 through water supply pipe 88. The top end of water supply pipe 88 extends to the top surface side of inclined plate 86a, penetrating inclined plate 86a, and water supplied to the top surface side of inclined plate 86a pools between the top surface of inclined plate 86a and the inside wall surface of external cylindrical member 66. Water supplied to the top surface of inclined plate 86a is vaporized there, producing steam.

0066 A combustion gas introducing portion for introducing raw fuel gas into fuel gas supply flow path 20 is erected under vaporization section 86. Raw fuel gas fed from fuel blower 38 is introduced into fuel gas supply flow path 20 through fuel gas supply pipe 90. Fuel gas supply pipe 90 is a type extending vertically inside fuel gas supply flow path 20 from the bottom end of inside cylindrical member 64. The top end of fuel gas supply pipe 90 is positioned beneath inclined plate 86a. Raw fuel gas fed from fuel blower 38 is introduced at the bottom side of inclined plate 86a and rises to the top side of inclined plate 86a as its flow path is restricted by the slope of inclined plate 86a. Raw fuel gas rising to the top side of inclined plate 86a rises together with the steam produced by vaporization section 86.

0067 A fuel gas supply flow path partition 92 is erected above vaporization section 86 in fuel gas supply flow path 20. Fuel gas supply flow path partition 92 is a ring-shaped metal plate disposed to separate into top and bottom portions the ring-shaped space between the inside perimeter of external cylindrical member 66 and the outside perimeter of intermediate cylindrical member 65. Multiple equally spaced jet openings 92a are provided in a circle on fuel gas supply flow path partition 92, and the spaces above and below fuel gas supply flow path partition 92 communicate through these jet openings 92a. Raw fuel gas introduced from fuel gas supply pipe 90 and steam produced by vaporization section 86 are first pooled in the space on the bottom side of fuel gas supply flow path partition 92, then passed through each of the jet openings 92a and jetted into the space on the top side of fuel gas supply flow path partition 92. When jetted into the wide space on the top side of fuel gas supply flow path partition 92 from each of the jet openings 92a, the raw fuel gas and steam suddenly decelerate and sufficiently mix here.

0068 In addition, a reforming section 94 is erected on the top portion of the ring shaped space between the inside perimeter of intermediate cylindrical member 65 and the outside perimeter of inside cylindrical member 64. Reforming section 94 is disposed so as to surround the top portion of each individual fuel cell 16 and the perimeter of the exhaust collection chamber 18 at the top thereof. Reforming section 94 comprises a catalyst holding plate (not shown) attached to the outer wall surface of inside cylindrical member 64, and a reforming catalyst 96 held in place thereby.

0069 Thus when raw fuel gas and steam, mixed in the space over fuel gas supply flow path partition 92, makes contact with the reforming catalyst 96 filled into reforming section 94, the steam reforming reaction shown by Eq. (1) proceeds inside reforming section 94.

CₘHₙ + xH₂O→aCO₂ + bCO₂ + cH₂ (1)

0070 Fuel gas reformed in reforming section 94 flows downward in the space between the inside perimeter of intermediate cylindrical member 65 and the outside perimeter of inside cylindrical member 64, flowing into fuel gas dispersion chamber 76 to be supplied to each individual fuel cell 16. The steam reforming reaction is an endothermic reaction, however the heat required for the reaction is supplied by the combustion heat of off-gas flowing out from exhaust collection chamber 18 and the emitted heat produced in each individual fuel cell 16.

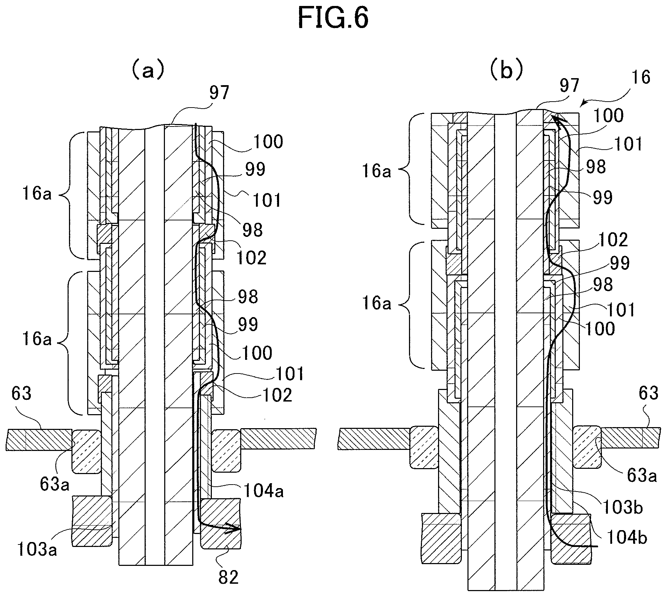

0071 Next, referring to Fig. 6, we explain fuel cells 16.

In the solid oxide fuel cell apparatus 1 of the embodiment, cylindrical crossbar cells using solid oxides are adopted as the fuel cells 16. Multiple single cells 16a are arranged in crossbar form on each individual fuel cell 16, and an individual fuel cell 16 is constituted by electrically connecting these together in series. Each individual fuel cell 16 comprises an anode (positive electrode) at one end and a cathode (negative electrode) at the other end; of the multiple fuel cells 16, half are disposed so that the top end is an anode and the bottom end is a cathode, and the other half are disposed so that the top end is a cathode and the bottom end is an anode.

0072 Fig. 6 (a) is a cross-section showing an expanded view of the bottom end of fuel cells 16 on which the bottom end is a cathode; (b) is a cross-section showing an expanded view of the bottom end of fuel cells 16 on which the bottom end is an anode.

0073 As shown in Fig. 6, fuel cells 16 are formed from elongated, cylindrical porous support body 97, and multiple layers formed in a crossbar shape on the outside of this porous support body 97. Respectively formed in a crossbar shape surrounding porous support body 97 in the following order, starting from the inside, are: fuel electrode 98, reaction suppression layer 99, solid electrolyte layer 100, and air electrode 101. Therefore fuel gas supplied via fuel gas dispersion chamber 76 flows into the porous support body 97 of each individual fuel cell 16, and air jetted from oxidant gas jetting pipe 74 flows to the outside of air electrode 101. Each of the single cells 16a formed at the top of fuel cells 16 comprises a set made up of a fuel electrode 98, reaction suppression layer 99, solid electrolyte layer 100, and air electrode 101. The fuel electrode 98 in one single cell 16a is electrically connected to the air electrode 101 of the adjacent single cell 16a through interconnector layer 102. By this means, the multiple single cells 16a formed on a single individual fuel cell 16 are electrically connected in series.

0074 As shown in Fig. 6(a), at the cathode-side and portion of fuel cells 16, an electrode layer 103a is formed on the outer perimeter of porous support body 97, and a lead film layer 104a is formed on the outside of this electrode layer 103a. In the cathode-side end, the air electrode 101 and electrode layer 103a of single cells 16a positioned at the end are electrically connected by interconnector layer 102. This electrode layer 103a and lead film layer 104a are formed to penetrate first affixing member 63 at the end of fuel cells 16, and protrude further downward than first affixing member 63. Electrode layer 103a is formed further down than lead film layer 104a, and externally exposed power collector 82 is electrically connected to electrode layer 103a. Thus air electrode 101 of single cell 16a positioned at the end is connected to power collector 82 through interconnector layer 102 and electrode layer 103a, and electrical current flows as shown by the arrow in the diagram. Ceramic adhesive is filled into the gap between the edge of the insertion holes 63a on first affixing member 63 and lead film layer 104a, and fuel cells 16 are affixed to first affixing member 63 on the outer circumference of lead film layer 104a.

0075 As shown in Fig. 6(b), on the individual fuel cell 16 anode side end, a fuel electrode layer 98 in single cell 16a positioned at the end extends, and the extended portion of fuel electrode 98 functions as an electrode layer 103b. Lead film layer 104b is formed on the outside of electrode layer 103b. This electrode layer 103b and lead film layer 104b are formed to penetrate first affixing member 63 at the end of fuel cells 16, and protrude further downward than first affixing member 63. Electrode layer 103b is formed further down than lead film layer 104b, and externally exposed power collector 82 is electrically connected to electrode layer 103b. Thus the fuel electrode 98 of single cell 16a positioned at the end is connected to power collector 82 through integrally formed electrode layer 103b, and electrical current flows as shown by the arrow in the diagram. Ceramic adhesive is filled into the gap between the edge of the insertion holes 63a on first affixing member 63 and lead film layer 104b, and fuel cells 16 are affixed to first affixing member 63 on the outer circumference of lead film layer 104b.

0076 In Fig. 6 (a) and (b) we explained the constitution of the bottom and portion of each individual fuel cell 16; the top and portion of each individual fuel cell 16 is the same. Note that at the top end each individual fuel cell 16 is affixed to the collection chamber lower member 18b of exhaust collection chamber 18; the structure of the affixing part is the same as affixing to the first affixing member 63 at the bottom end.

0077 Next we explain the constitution of porous support body 97, and of each layer.

The porous support body 97 in the embodiment is formed by extruding and sintering a mixture of forsterite powder and the binder.

In the embodiment, fuel electrode 98 is an electrically conductive thin film comprised of a mixture of NiO powder and 10YSZ (10mol% Y₂O₃ - 90mol% ZrO₂) powder.

0078 In the embodiment, reaction suppression layer 99 is a thin film comprising cerium compound oxide (LDC 40; i.e., 40 mol% La2O3 - 60 mol% CeO2) or the like, by which chemical reactions between fuel electrode 98 and solid electrolyte layer 100 are suppressed. I.e., it is a thin film constituted of 40mol% La₂O₃ -60mol% CeO₂. In the embodiment, solid electrolyte layer 100 is a thin film comprising an LSGM powder composition of La_{.09} Sr_{0.1} Ga_{0.8} Mg_{0.2} O₃. Electrical energy is produced by the reaction between oxide ions and hydrogen or carbon monoxide through this solid electrolyte layer 100.

0079 In the embodiment, air electrode 101 is an electrically conductive thin film comprising a powder composition of La_{0.6} Sr_{0.4} Co_{0.8} Fe_{0.2} O₃.

In the embodiment, interconnector layer 102 is an electrically conductive thin film comprising SLT (lanthanum doped strontium titanate). Adjacent single cells 16a on fuel cells 16 are connected via interconnector layer 102.

In the embodiment, electrode layers 103a and 103b are formed of the same material as fuel electrode 98.

In the embodiment, lead film layers 104a and 104b are formed of the same material as solid electrolyte layer 100.

0080 Next, referring to Figs. 1 and 2, we discuss the operation of solid oxide fuel cell apparatus 1.

First, in the startup step of solid oxide fuel cell apparatus 1, fuel blower 38 is started, and power to the sheath heater 61 is started at the same time as the supply of fuel is started. By starting the power to sheath heater 61, the combustion catalyst 60 disposed above sheath heater 61 is heated, and vaporization section 86 disposed on the inside thereof is also heated. Fuel supplied by fuel blower 38 flows from fuel gas supply pipe 90 via desulfurizer 36, heat exchanger 34, and electromagnetic valve 35 into the interior of fuel cell housing container 8. In-flowing fuel, after rising up to the top end within fuel gas supply flow path 20, drops down within reforming section 94, then through small holes 64b placed on the bottom portion of inside cylindrical member 64, and into fuel gas dispersion chamber 76. Note that immediately after the of solid oxide fuel cell apparatus 1 startup step, because the temperature of reforming catalyst 96 in reforming section 94 has not risen sufficiently, no fuel reforming is performed.

0081 Fuel gas which has flowed into fuel gas dispersion chamber 76 flows through the inside (the fuel electrode side) of each of the fuel cells 16 attached to first affixing member 63 of fuel gas dispersion chamber 76 and into exhaust collection chamber 18. Note that immediately after startup of solid oxide fuel cell apparatus 1, the temperature of each of the solid oxide fuel cell apparatus 1 has not risen sufficiently, or power is not being extracted to inverter 54, therefore no electrical generating reaction is occurring.

0082 Fuel flowing into exhaust collection chamber 18 is jetted from exhaust collection chamber 18 jet openings 18d. Fuel jetted from jet openings 18d is ignited by ignition heater 62 and combusted. Reforming section 94, disposed around exhaust collection chamber 18, is heated by this combustion. Exhaust gas produced by combustion flows into exhaust gas discharge flow path 21 through small holes 64a formed in the top portion of inside cylindrical member 64. High temperature exhaust gas descends the interior of exhaust gas discharge flow path 21, heating fuel flowing in the fuel gas supply flow path 20 disposed on the inside thereof and generating air flowing in the oxidant gas supply flow path 22 disposed on the outside thereof. In addition, exhaust gas passes through the combustion catalyst 60 disposed within exhaust gas discharge flow path 21, whereby carbon monoxide is removed, then passes through exhaust gas exhaust pipe 58 to be discharged from fuel cell housing container 8.

0083 When vaporization section 86 is heated by exhaust gas and sheath heater 61, water for steam reforming supplied to vaporization section 86 is vaporized and steam is produced. Water for steam reforming is supplied by water flow volume regulator unit 28 to vaporization section 86 in fuel cell housing container 8 via water supply pipe 88. When steam is produced by vaporization section 86, fuel supplied through fuel gas supply pipe 90 is first held in the space on the bottom side of fuel gas supply flow path partition 92 inside fuel gas supply flow path 20, then jetted from multiple jet openings 92a formed in fuel gas supply flow path partition 92. Fuel and steam jetted with high force from jet openings 92a are well blended by being decelerated in the space on the top side of fuel gas supply flow path partition 92.

0084 Blended fuel and steam rise up within fuel gas supply flow path 20 and flow into reforming section 94. In a state whereby the reforming section 94 reforming catalyst 96 has risen to a temperature at which reforming is possible, a steam reforming reaction occurs when the mixed gas of fuel and steam passes through reforming section 94, and the mixed gas is reformed into a hydrogen-rich fuel. Reformed fuel passes through small holes 64b and flows into fuel gas dispersion chamber 76. A large number of small holes 64b are formed around fuel gas dispersion chamber 76, and sufficient capacity is thus assured for fuel gas dispersion chamber 76, therefore reformed fuel flows in uniformly to the fuel cells 16 with which it collides in the fuel gas dispersion chamber 76.

0085 At the same time air, which is the oxidant gas supplied by generating air flow regulator unit 45, flows into oxidant gas supply flow path 22 via oxidant gas introducing pipe 56. Air flowing into oxidant gas supply flow path 22 rises up in oxidant gas supply flow path 22 as it is heated by the exhaust gas flowing on the inside thereof. Air rising in oxidant gas supply flow path 22 is gathered at the center of the top end in fuel cell housing container 8 and flows into the oxidant gas jetting pipe 74 which communicates with oxidant gas supply flow path 22. Air flowing into oxidant gas jetting pipe 74 is jetted from the bottom end thereof into generating chamber 10; the jetted air then hits the top surface of first affixing member 63 and spreads throughout the entire generating chamber 10. Air flowing into generating chamber 10 rises up through the gap between the outer perimeter wall of exhaust collection chamber 18 and the inner perimeter wall of inside cylindrical member 64, and through the gap between the inside perimeter wall of exhaust collection chamber 18 and the outside circumferential surface of oxidant gas jetting pipe 74.

0086 At this point, a portion of the air passing over the exteriors (air electrode side) of each individual fuel cell 16 is used for the generating reaction. In addition, a portion of the air rising above exhaust collection chamber 18 is used to combust the fuel jetted from exhaust collection chamber 18 jet openings 18d. Exhaust gas produced by combustion and air not used for electrical generation or combustion passes through small holes 64a and flows into exhaust gas discharge flow path 21. Exhaust gas and air flowing into exhaust gas discharge flow path 21 is discharged after carbon monoxide is removed by combustion catalyst 60.

0087 Thus when each individual fuel cell 16 rises to approximately 650°C at which generation is possible, and reformed fuel flows into the interior (fuel electrode side) of each individual fuel cell 16 and air flows on the outside (air electrode side) thereof, a starting power is generated by chemical reaction. In this state, when inverter 54 is connected to bus bars 80 drawn out from fuel cell housing container 8, power is extracted from each individual fuel cell 16 and electrical generation is implemented.

0088 In solid oxide fuel cell apparatus 1 of the embodiment, generating air is jetted from the oxidant gas jetting pipe 74 disposed at the center of generating chamber 10 and rises up through generating chamber 10 in the uniform gap between exhaust collection chamber 18 and inside cylindrical member 64 and in the uniform gap between exhaust collection chamber 18 and oxidant gas jetting pipe 74. Therefore the flow of air inside generating chamber 10 is an essentially completely axially symmetrical flow, and air flows homogeneously around each individual fuel cell 16. Temperature differences between fuel cells 16 are thereby suppressed, and a uniform starting power can be produced by each individual fuel cell 16.

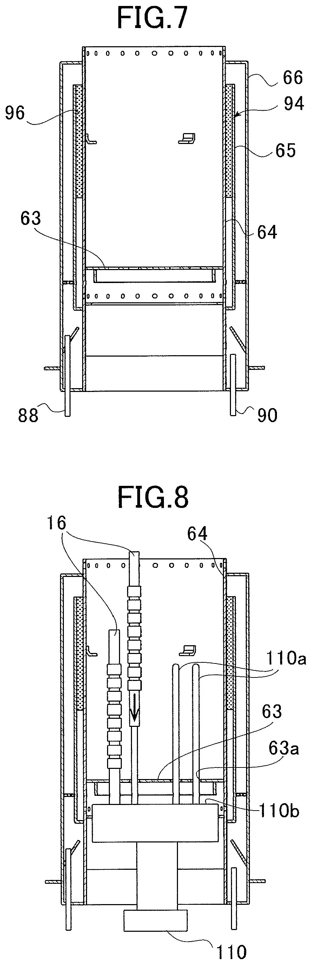

0089 Next, referring to Figs. 7 through 26, we explain a method for manufacturing solid oxide fuel cell apparatus 1 according to an embodiment of the invention.

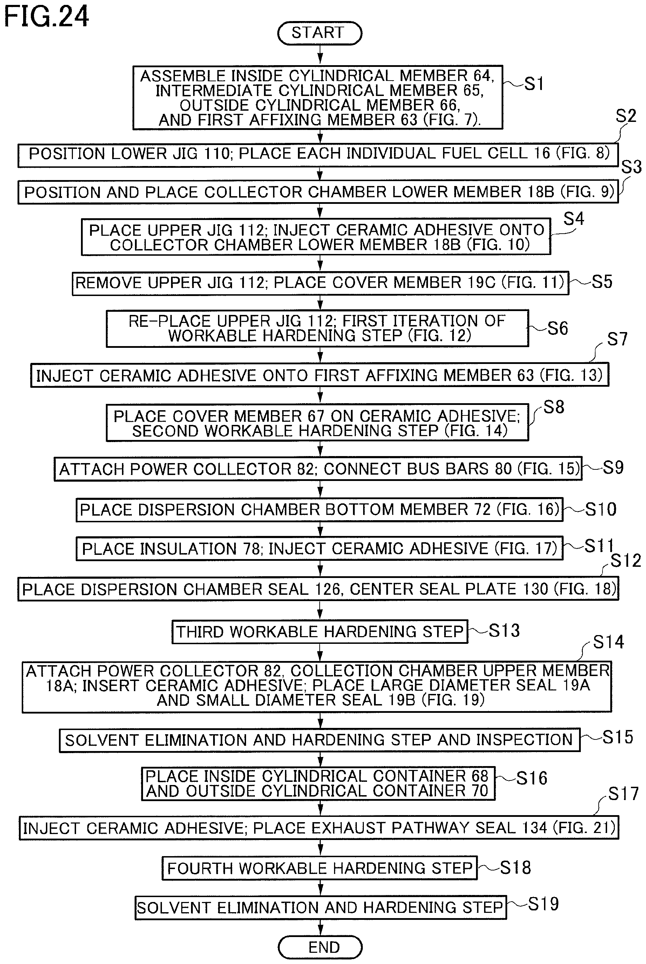

Figs. 7 through 21 are schematics showing the procedure for manufacturing solid oxide fuel cell apparatus 1; for explanatory purposes the detailed constitution thereof is omitted. Fig. 24 is a flowchart showing the manufacturing procedure for solid oxide fuel cell apparatus 1.

0090 First, as shown in Fig. 7, inside cylindrical member 64, intermediate cylindrical member 65, external cylindrical member 66, and first affixing member 63 are assembled by welding (step S1 in Fig. 24). Here first affixing member 63 is disposed so as to be perpendicular to the center axis line of inside cylindrical member 64, and the outer circumferential edge thereof is welded in an airtight manner to the inside wall surface of inside cylindrical member 64. In addition, reforming catalyst 96 is filled into the reforming section 94 provided between inside cylindrical member 64 and intermediate cylindrical member 65. Furthermore, water supply pipe 88 and fuel gas supply pipe 90 are also attached by welding.

0091 Next, as shown in Fig. 8, lower fixture 110, which is a first positioning device, is accurately positioned relative to inside cylindrical member 64 (step S2 in Fig. 24). Lower fixture 110 comprises multiple positioning shafts 110a extending upward, parallel to inside cylindrical member 64; these positioning shafts 110a are disposed to penetrate each of the insertion holes 63a formed in first affixing member 63 and extend. In addition, fuel cells 16 are respectively disposed on each of the positioning shafts 110a which penetrate insertion holes 63a and extend. In this step, each individual fuel cell 16 is inserted into each insertion hole 63a of first affixing member 63.

0092 By the insertion of positioning shafts 110a into fuel cells 16, one end of fuel cells 16 is positioned relative to positioning shafts 110a. Since lower fixture 110 is positioned relative to inside cylindrical member 64, one end of individual fuel cell 16 is accurately positioned relative to inside cylindrical member 64, a constituent of fuel cell module 2. Moreover, because the bottom end of each fuel cell 16 contacts the base end surface 110b of positioning shafts 110a, the bottom ends of all fuel cells 16 are positioned in the same plane. I.e., the projection length of each individual fuel cell 16 from first affixing member 63 is fixed. On the other hand, because there is variability in the lengths of fuel cells 16 due to manufacturing tolerances, the heights of the top ends of the fuel cells 16 are not perfectly uniform.

Therefore in this step, the one end of each fuel cell 16 inserted into each of the insertion holes 63a is positioned relative to the inside cylindrical member 64 that makes up fuel cell module 2.

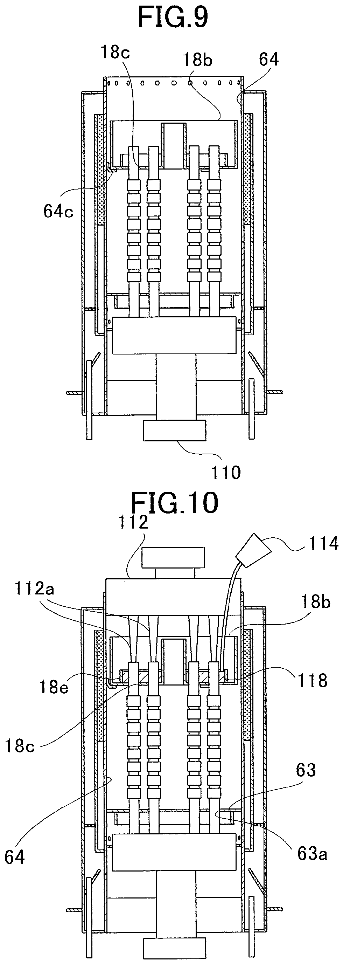

0093 Next, as shown in Fig. 9, collection chamber lower member 18b, which is a second affixing member and constituent of exhaust collection chamber 18, is positioned at the top end of individual fuel cell 16 (step S3 in Fig. 24). The three stays 64c, which are positioning members, are welded to the inside wall surface of inside cylindrical member 64. Each stay 64 comprises a parallel portion extending parallel to first affixing member 63, and is disposed at equal intervals on the inside wall surface of inside cylindrical member 64. When collection chamber lower member 18b is disposed on top of each stay 64c, collection chamber lower member 18b is dropped down to the parallel portion of each of the stays 64c and accurately positioned relative to inside cylindrical member 64, which makes up the inside wall surface of generating chamber 10. In this state, a uniform gap is formed between the inside circumferential surface of inside cylindrical member 64 and the outside circumferential surface of collection chamber lower member 18b. In this state, the top ends of fuel cells 16 are inserted to each of the insertion holes 18c in collection chamber lower member 18b, which constitutes the second affixing member.

0094 In addition, as shown in Fig. 10, a upper fixture 112, being a second positioning apparatus, is disposed at the top portion of inside cylindrical member 64 (Fig. 24, step S4). Upper fixture 112 comprises multiple truncated cones 112a extending downward, parallel to inside cylindrical member 64. The tips of truncated cones 112a are inserted into downward extending fuel cells 16, and the side surface of each of the truncated cones 112a contacts the top and portion of fuel cells 16. Since upper fixture 112 is correctly positioned relative to inside cylindrical member 64, the top ends of each of the fuel cells 16 are also correctly positioned relative to inside cylindrical member 64.

Therefore in this step, the other end of the fuel cells 16 inserted into insertion holes 18c of collection chamber lower member 18b is registered by upper fixture 112 relative to the inside cylindrical member 64, which constitutes fuel cell module 2.

0095 Thus the top end and bottom portion of each of the fuel cells 16 are accurately positioned relative to inside cylindrical member 64. In this state, an essentially fixed gap is formed between the outer circumferential surface of each individual fuel cell 16 and the insertion holes 18c in collection chamber lower member 18b, as well as the insertion holes 63a in first affixing member 63. I.e., each individual fuel cell 16 is positioned at a predetermined position relative to fuel cell module 2 (inside cylindrical member 64), in a state whereby each insertion hole 18c in collection chamber lower member 18b is separated by a predetermined distance from the edge portion of insertion hole 63a on first affixing member 63. A small curve is present in the fuel cells 16 due to manufacturing tolerances, however since fuel cells 16 are correctly positioned relative to fuel cell module 2 at the top and bottom ends, the gap between the outer circumferential surface of fuel cells 16 and each of the insertion holes can be made essentially uniform.

0096 Thus in a state whereby each of the fuel cells 16 is positioned, an adhesive applying step is implemented in which ceramic adhesive is injected onto collection chamber lower member 18b by an adhesive injection apparatus, being an adhesive application apparatus. An adhesive filling frame 18e extending in a ring shape to surround all of insertion holes 18c is disposed on collection chamber lower member 18b (Fig. 4). Adhesive injection apparatus 114 fills the inside of adhesive filling frame 18e which surrounds insertion holes 18c with adhesive and applies ceramic adhesive to the joint portion. The region surrounded by adhesive filling frame 18e on collection chamber lower member 18b functions as an adhesive receiving section. Ceramic adhesive is a viscous liquid which slides on collection chamber lower member 18b when injected, and its viscosity is adjusted to the level that an essentially uniform thickness of ceramic adhesive layer 118 can be formed on the inside of adhesive filling frame 18e. Injected ceramic adhesive does fill gaps, eve running into the gap between the outer circumferential surface of each of the fuel cells 16 and the insertion holes 18c, but is given a viscosity such that it will not run downward from these gaps.

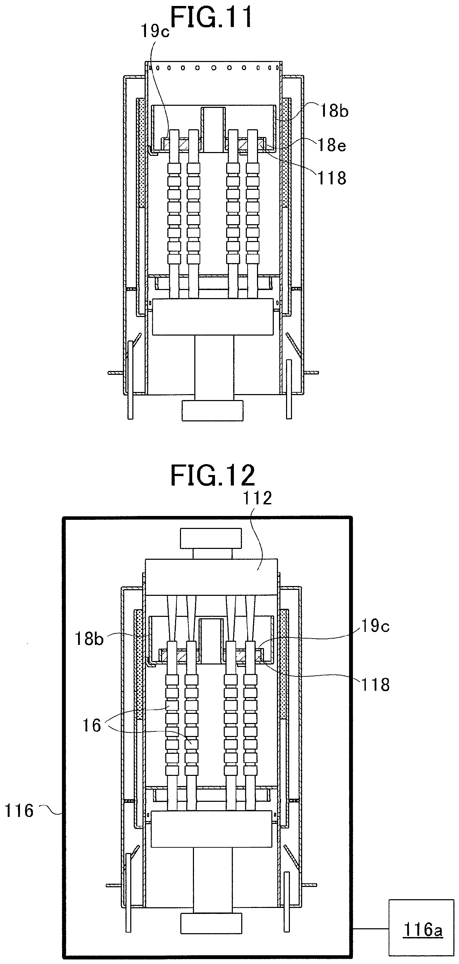

0097 As shown in Fig. 11, a predetermined amount of ceramic adhesive is injected, and after ceramic adhesive layer 118 spreads out uniformly on the inside of adhesive filling frame 18e on top of collection chamber lower member 18b, the upper fixture 112 is removed. In this state, cover member 19c is disposed on top of injected ceramic adhesive layer 118 (Fig. 24, step S5).

0098 As shown in Fig. 12, after cover member 19c is placed, upper fixture 112 is once again attached, and the apparatus placed in this state into drying oven 116; ceramic adhesive layer 118 is hardened and the outer circumferential surface of each individual fuel cell 16 is affixed to collection chamber lower member 18b (Fig. 24, step S6). Therefore drying oven 116 functions as an adhesive hardening apparatus. Thus the cell joining portion between fuel cells 16, which are constituent parts of the flow path which guides fuel, and collection chamber lower member 18b, is joined in an airtight manner by ceramic adhesive layer 118.

0099 Next we explain the dry hardening step for dry hardening ceramic adhesive. The dry hardening step has a workable hardening step for hardening the ceramic adhesive to a state in which the next manufacturing step can be executed, and a solvent elimination step for hardening the ceramic adhesive to a state in which it can withstand the temperature rise in start up step of solid oxide fuel cell apparatus 1. Below we explain the workable heartening step.

In the embodiment, ceramic adhesives containing aluminum oxide, quartz, alkali metal silicates, silicon dioxide, and water are used as ceramic adhesive in the embodiment, and these ceramic adhesives are hardened by a dehydration condensation reaction. I.e., ceramic adhesives are hardened by the evaporation of included water, and of moisture produced by the condensation reaction. Therefore an extremely long time period is required to dry and harden ceramic adhesives at room temperature, so it is common in industry to harden using a drying oven or the like. However, because moisture is evaporated and volume shrinks when ceramic adhesive is hardened, cracks form in the ceramic adhesive layer with normal drying and hardening.

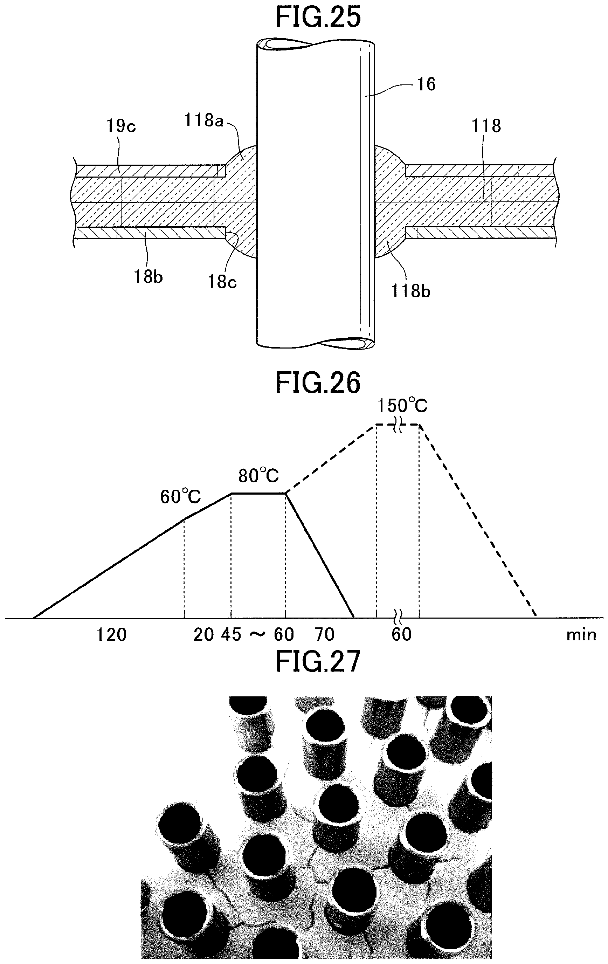

0100 Fig. 27 is a photograph showing an example of when an individual fuel cell is adhered by the normal adhesion method using ceramic adhesive. As shown in Fig. 27, a large number of cracks has occurred in the hardened ceramic adhesive layer. Cracks are thought to occur on the surface of the earlier hardening adhesive layer at the time of hardening, when moisture in the surface of the adhesive layer evaporates earlier and the adhesive hardens, so that internal moisture evaporates later. Even in such a state, the fuel cells are adhered with sufficient strength, but partial gaps form between the fuel cells and the ceramic adhesive so that sufficient airtightness cannot be secured. I.e., when ceramic adhesive is used with conventional methods, it is difficult to obtain adhesion and airtightness simultaneously, and this is believed to be the reason that they have still not reached a practical stage, notwithstanding multiple literature references proposing the use of ceramic adhesives in the technical field of solid oxide fuel cells.

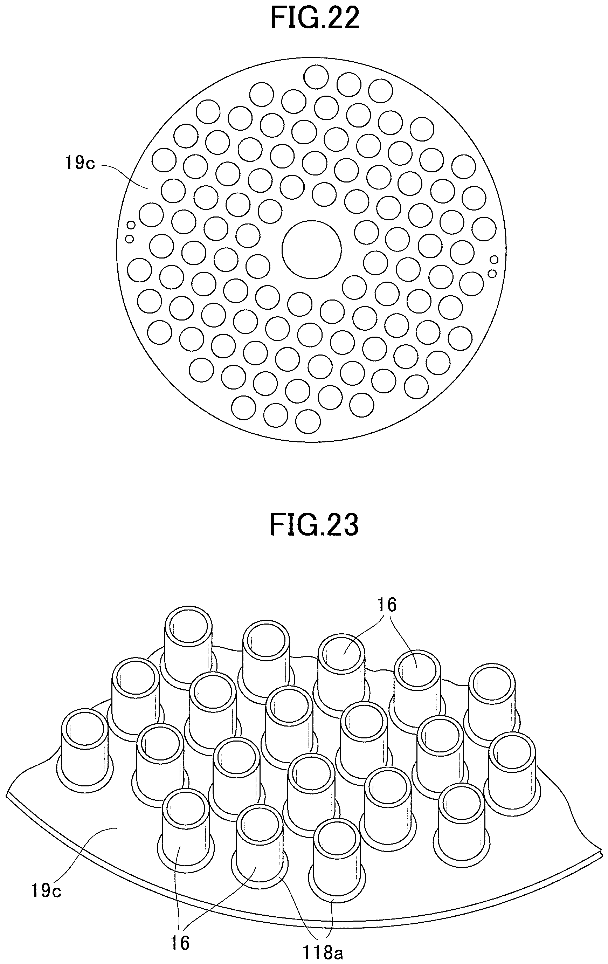

0101 Fig. 22 is plan view of cover member 19c disposed on injected ceramic adhesive in the embodiment.

Cover member 19c is a circular metal plate; a large circular opening for inserting the cylindrical portion of collection chamber lower member 18b is formed at the middle thereof, and multiple insertion holes for inserting each of the fuel cells 16 are formed in the periphery thereof. In the embodiment, the position and size of the insertion holes is constituted to be the same as that of insertion holes 18c in collection chamber lower member 18b.

0102 Fig. 23 is a perspective view showing cover member 19c disposed on the injected ceramic adhesive.

As shown in Fig. 23, when cover member 19c is disposed on be injected ceramic adhesive, ceramic adhesive underneath cover member 19c is pushed out by the weight of cover member 19c. The pushed out ceramic adhesive is filled into the gap between the insertion holes in cover member 19c and the outer circumferential surface of fuel cells 16, and protrudes on the perimeter of the fuel cells 16. As a variant example, a perimeter wall can be formed to surround the insertion holes on the edges of each insertion hole in cover member 19c. Thus even if a large amount of ceramic adhesive is pushed out around each of the fuel cells 16, the flow of adhesive onto cover member 19c can be suppressed.

0103 Note that each of fuel cells 16 is adhered with ceramic adhesive to the lead film layer 104a, 104b parts thereof (Fig. 6). Lead film layers 104a, 104b are dense layers, the same as solid electrolyte layer 100, therefore ceramic adhesive does not invade porous layers in porous support body 97 or the like, and airtightness is not compromised.

0104 Fig. 25 is a cross section showing an expanded view of the adhering portion of fuel cells 16 to collection chamber lower member 18b.

As shown in Fig. 25, fuel cells 16 are inserted into the insertion holes 18c in collection chamber lower member 18b, and ceramic adhesive is injected onto collection chamber lower member 18b. Cover member 19c is disposed on the injected ceramic adhesive. Insertion holes are also formed in cover member 19c at the same positions as collection chamber lower member 18b, and fuel cells 16 penetrate these insertion holes and extend. Since a predetermined gap is present between the insertion holes in cover member 19c and the outer circumferential surface of fuel cells 16, cover member 19c is mounted on top of the ceramic adhesive so that the surface region of the joined fuel cells 16 is exposed. Thus ceramic adhesive layer 118 is formed between collection chamber lower member 18b and cover member 19c. A part of the ceramic adhesive is pressed out from beneath cover member 19c in the surface vicinity of fuel cells 16; the amount of ceramic adhesive in this vicinity increases and a prominence 118a is formed on the periphery of fuel cells 16. Also, pressed out ceramic adhesive forms a hanging portion 118b between insertion holes 18c and fuel cells 16, but due to viscosity, the ceramic adhesive does not flow downward. The assembly on which cover member 19c is disposed is placed in this state into drying oven 116 (Fig. 12).

0105 Fig. 26 is a graph of an example of the temperature control inside drying oven 116.

In the workable hardening step shown in Fig. 12, the temperature inside drying oven 116 is controlled by heating control device 116a as shown by the solid line in Fig. 26. First, after an assembly is placed in drying oven 116, the temperature inside drying oven 116 is raised over a period of approximately 120 minutes from room temperature to approximately 60°C. Next, the temperature inside drying oven 116 is raised over approximately 20 minutes to approximately 80°C, then maintained at the predetermined first temperature of approximately 80 °C for approximately 60 minutes. After maintaining the temperature at approximately 80°C, the temperature inside drying oven 116 is returned to room temperature over approximately 30 minutes.

0106 Thus by gradually raising the temperature, moisture in the ceramic adhesive layer 118 vaporizes slowly. However, because ceramic adhesive layer 118 is covered by cover member 19c, moisture does not directly vaporize from the part covered by cover member 19c. Therefore moisture in ceramic adhesive layer 118 is vaporized slowly through prominence 118a or hanging portion 118b on the periphery of fuel cells 16. Because of this concentration of moisture in prominence 118a and hanging portion 118b, which are exposed to outside air, it is difficult for these parts to dry. Since cover member 19c and collection chamber lower member 18b are made of metal with a high coefficient of thermal conductivity, heating of ceramic adhesive layer 118 is averaged even in cases where there is localized heating due to temperature unevenness, etc. within drying oven 116. This enables the suppression of cracks caused by sudden localized drying of the ceramic adhesive layer 118. On the other hand, because each of the fuel cells 16 is made of ceramic with a low coefficient of thermal conductivity, it is difficult for heat to transfer to the prominence 118a and hanging portion 118b around the fuel cells 16, and the drying and hardening of these parts is thus more gradual than other parts.

0107 Thus in the embodiment, because drying of the prominence 118a and hanging portion 118b on each of the fuel cells 16 is gradual, what is important for securing airtightness is to prevent cracking in the periphery of each of the fuel cells 16. Vaporization of moisture from the ceramic adhesive also results in reduction in the volume of the ceramic adhesive layer 118, producing "shrinkage." However in the peripheral part of each of the fuel cells 16, because of the formation of prominence 118a and hanging portion 118b, the ceramic adhesive layer is thicker than in other parts, therefore gaps between fuel cells 16 and the ceramic adhesive layer caused by the occurrence of shrinkage can be prevented. Thus airtightness can be secured in the adhered portion between each of the fuel cells 16 and each of the insertion holes 18c. Cover member 19c, which is disposed to cover the parts filled with ceramic adhesive, suppresses the occurrence of cracks when the ceramic adhesive hardens.

0108 Because of the formation of prominence 118a and hanging portion 118b, there is little through-puncturing of the ceramic adhesive by cracks even if a few cracks do occur in these parts, so airtightness can be reliably secured. Therefore prominence 118a and hanging portion 118b function as gas leak prevention portions for suppressing the occurrence of cracks caused by shrinkage when the ceramic adhesive hardens. Note that hardened ceramic adhesive is porous, and although airtightness relative to hydrogen or air is not total, a ceramic adhesive filled and hardened without gaps provides sufficient airtightness for practical use. In this Specification, the term "securing airtightness" means there are no leaks of moisture or air at a practical level.

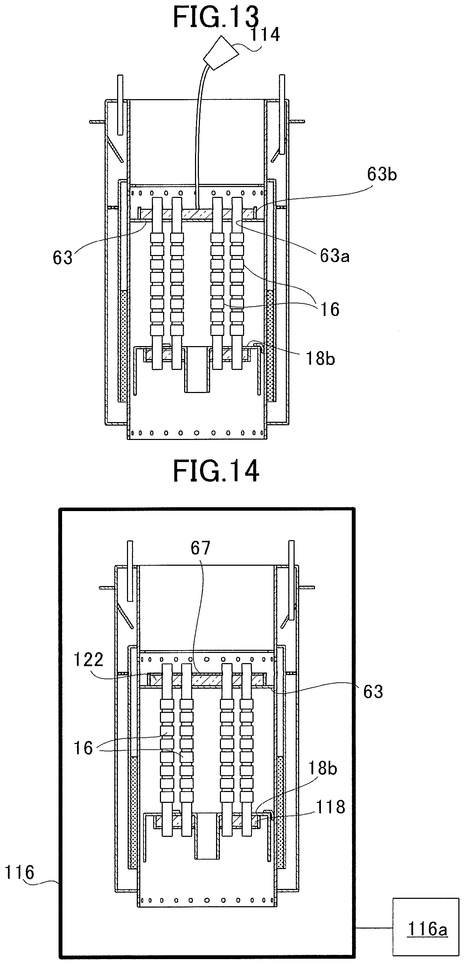

0109 In the workable hardening step shown in Fig. 12, the ceramic adhesive is hardened to a state in which the manufacturing steps subsequent to step S7 in Fig. 7 can be practiced. In this state, adhesion strength from the ceramic adhesive is sufficiently high, and in the use of common ceramic adhesives, this state can be viewed as the completion of the adhesion step. However, when ceramic adhesive is use in the assembly of solid oxide fuel cell apparatus 1, this state is insufficient, and if solid oxide fuel cell apparatus 1 is operated in this state, residual moisture inside solid oxide fuel cell apparatus 1 will suddenly vaporize, causing large cracks in the ceramic adhesive. In this embodiment, for this state, the manufacturing steps in Fig. 13 and below are implemented.

0110 Next, after performing the workable hardening step, lower fixture 110 and upper fixture 112 are removed. Furthermore, as shown in Fig. 13, the top and bottom of the assembly are inverted, and ceramic adhesive is injected into the top of first affixing member 63 (the bottom surface when top and bottom are uninverted), from which the tip portions of each of the fuel cells 16 are protruding (Fig. 24, step S7). The outer circumferential surfaces of each of the fuel cells 16 with circular cross sections are affixed by ceramic adhesive to the edge portions of each of the round insertion holes 63a disposed on first affixing member 63. Here, adhesive filling frame 63b, extending in a circular shape to surround all of the insertion holes 63a, is disposed on first affixing member 63 (Fig. 3). For the adhesive application step, ceramic adhesive is injected by adhesive injection apparatus 114 into the interior of adhesive filling frame 63b, which surrounds each of the insertion holes 63a. Note that adhesion of each of the fuel cells 16 to first affixing member 63 in this step is the same as the above-described adhesion to collection chamber lower member 18b. Also, in this step each of the fuel cells 16 is affixed to collection chamber lower member 18b, therefore each of the fuel cells 16 can be held in the appropriate position without using upper fixture 112.

0111 Furthermore, as shown in Fig. 14, cover member 67 is disposed on the injected ceramic adhesive, and a ceramic adhesive layer 122 is formed between first affixing member 63 and cover member 67 (Fig. 24, step S8). Except for the formation of a circular opening at the center, cover member 67 is constituted in the same way as cover member 19c (Fig. 22), suppressing cracking during ceramic adhesive hardening. By placement of this cover member 67, a prominence and a hanging portion similar to Fig. 25 are formed on the periphery of each of the fuel cells 16, and the peripheral part of ceramic adhesive layer 122 on each of the fuel cells 16 serves to suppress gas leakage.

0112 In this state, assembly is placed in drying oven 116, and the second workable hardening step is implemented. In this workable hardening step, as well, the temperature inside drying oven 116 is controlled as shown by the solid line in Fig 26. Note that in the embodiment, in the second workable hardening step the time during which the temperature inside drying oven 116 is maintained at 80°C is set to approximately 50 minutes. In the second workable hardening step, ceramic adhesive layer 122 on first affixing member 63 is hardened, and each of the fuel cells 16 is affixed to first affixing member 63. Thus the cell joining portion between fuel cells 16, which are constituent parts of the flow path which guides fuel, and first affixing member 63, is joined in an airtight manner by ceramic adhesive layer 118. The operation of cover member 67 on this occasion is the same as in the first workable hardening step. Ceramic adhesive layer 118 is placed in a more stable state by the implementation of the second workable hardening step to ceramic adhesive layer 118 on collection chamber lower member 18b.

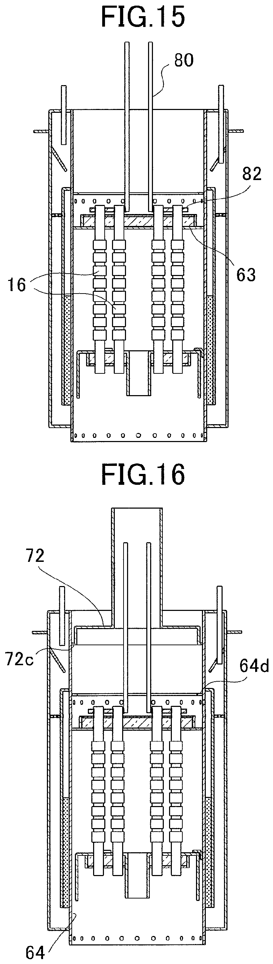

0113 Next, as shown in Fig. 15, power collector 82 is attached to the tip portions (the bottom portion when top and bottom are inverted) of each of the fuel cells 16 protruding from first affixing member 63, and this power collector 82 is connected to bus bars 80 (Fig. 24, step S9).

0114 Furthermore, as shown in Fig. 16, dispersion chamber bottom member 72 is inserted from the opening at the bottom of inside cylindrical member 64 at the bottom of Fig. 16). This dispersion chamber bottom member 72 is inserted up to the position at which the flange portion 72c on the outer circumference thereof makes contact with the ring shaped shelf member 64d welded onto the inside wall surface of inside cylindrical member 64, and will be registered at that position.

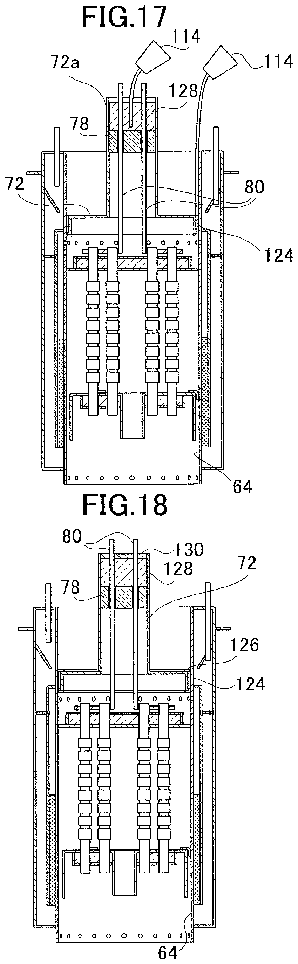

0115 Next, as shown in Fig. 17, ceramic adhesive is filled by adhesive injection apparatus 114 into the circular gap between the outer circumferential surface of dispersion chamber bottom member 72 and the inner circumferential surface of inside cylindrical member 64. Also, insulator 78 is disposed in the middle of the insertion pipe 72a provided at the center of dispersion chamber bottom member 72, and each of the bus bars 80 extending from power collector 82 penetrate this insulator 78. In addition, as an adhesive application step, ceramic adhesive is filled by adhesive injection apparatus 114 into the insertion pipe 72a on which insulator 78 is disposed. Each of the bus bars 80 extends through insertion pipe 72a to the outside, and ceramic adhesive is filled into the space surrounding each of the bus bars 80 inside insertion pipe 72a (Fig. 24, step S11).

0116 In addition, a dispersion chamber seal 126, being a circular thin plate on the ceramic adhesive layer 124 filled into the circular gap between the outer circumferential surface of dispersion chamber bottom member 72 and the inner circumferential surface of inside cylindrical member 64, is disposed as shown in Fig. 18. Also, a center seal plate 130 is disposed on the ceramic adhesive layer 128 filled into the interior of insertion pipe 72a (Fig. 24, step S12). A center seal plate 130 penetrates the holes formed on each bus bar 80. These dispersion chamber seals 126 and center seal plates 130 function as cover members for controlling the occurrence of cracks when the ceramic adhesive is hardening. In the state, the assembly is placed into drying oven 116 (not shown in Fig. 18), and a third workable hardening step is implemented (Fig. 24, step S13). In this workable hardening step, as well, the temperature inside drying oven 116 is controlled as shown by the solid line in Fig 26. Note that in the embodiment, in the third workable hardening step the time during which the temperature inside drying oven 116 is maintained at 80°C is set to approximately 45 minutes. In the second workable hardening step, ceramic adhesive layer 124 is hardened, and dispersion chamber bottom member 72 and inside cylindrical member 64 are adhered and affixed. Thus the joint portion between dispersion chamber bottom member 72, which is a constituent part of the flow path guiding fuel, and inside cylindrical member 64, is joined in an airtight manner by ceramic adhesive. In addition, ceramic adhesive layer 128 is also hardened, and insertion pipe 72a through which each of the bus bars 80 penetrate is closed off in an airtight manner.

0117 When these ceramic adhesives are dried, dispersion chamber seal 126 and center seal plate 130 prevent the sudden drying out of the surfaces of each of the adhesive layers, thereby suppressing the occurrence of cracks in ceramic adhesive layers 124 and 128. Also, ceramic adhesive layer 124, which is filled into the gap between inside cylindrical member 64 and dispersion chamber bottom member 72, is heated and hardened uniformly because of its circular shape, and the occurrence of cracking is thereby suppressed. For example, if the ceramic adhesive layer is formed in a rectangular shape, the speed of hardening differs between the corner portions and other parts, therefore the parts which dry and harden first are stretched by shrinkage of the ceramic adhesive and therefore tend to crack more easily. Stress is also more easily concentrated at the corner portions due to shrinkage of the ceramic adhesive such that cracks can easily occur. By contrast, because ceramic adhesive layer 124 in the embodiment is circular in shape, stress caused by shrinkage of the adhesive is not concentrated as drying and hardening proceed, therefore the occurrence of cracking associated with hardening of the ceramic adhesive can be suppressed. As a variant example, ceramic adhesive layer 124 can be constituted in an oval shape.

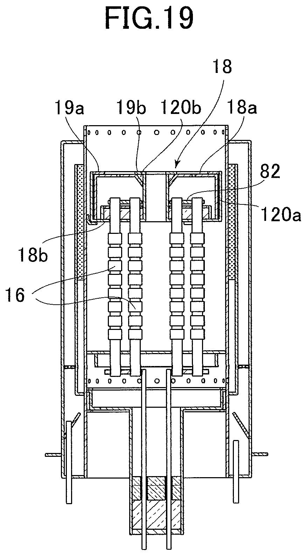

0118 After completion of the third workable hardening step, the top and bottom of the assembly are inverted, and as shown in Fig. 19, power collector 82 is attached to the tip portion of each of the fuel cells 16, which are affixed in such a way as to protrude from collection chamber lower member 18b (Fig. 24, step S14). The tip portions of each of the fuel cells 16 are thus electrically connected by this power collector 82. Furthermore, collection chamber upper member 18a is disposed on the opening portion at the top of collection chamber lower member 18b. There is a (circular) gap (Fig. 4) between the outer circumferential surface of the disposed collection chamber upper member 18a and the inner circumferential surface of the outer perimeter wall of collection chamber lower member 18b. Next, an adhesive application step is implemented to fill this gap with ceramic adhesive layer 120a using adhesive injection apparatus 114 (not shown in Fig. 19). A circular large diameter seal 19a is disposed so as to cover the filled-in adhesive on top of ceramic adhesive layer 120a. There is also a circular gap between the outer circumferential surface of collection chamber lower member 18b and the opening portion at the center of collection chamber upper member 18a, and this gap is also filled with ceramic adhesive layer 120b using adhesive injection apparatus 114 (not shown in Fig. 19). A circular small diameter seal 19b is disposed to cover the filled-in adhesive on top of ceramic adhesive layer 120b. This large diameter seal 19a and small diameter seal 19b function as cover members for controlling the occurrence of cracks when the ceramic adhesive is hardening.

0119 Note that as a variant example, the invention can be constituted in such a way that the members are formed so the gap between collection chamber upper member 18a and collection chamber lower member 18b is oval in shape, and exhaust collection chamber 18 is formed by filling this gap with ceramic adhesive. Note that as a variant example, the invention can be constituted in such a way that the members are formed so the gap between the cylindrical portion of collection chamber lower member 18b and the opening portion of collection chamber upper member 18a is oval in shape, and exhaust collection chamber 18 is formed by filling this gap with ceramic adhesive.

0120 The solvent elimination and hardening step is implemented on the assembly assembled to this state (Fig. 24, step S15). In this solvent elimination and hardening step, the assembly assembled with ceramic adhesive is heated to a predetermined second temperature, which is approximately equal to the temperature of fuel cells 16 during the electrical generation operation of solid oxide fuel cell apparatus 1. The ceramic adhesive is thus dried to a state able to withstand the temperature rise during the startup of solid oxide fuel cell apparatus 1. Note that an inspection of the assembly assembled up to step S14 in Fig. 24 can be performed at the same time as the solvent elimination and hardening step. An assembly on which this solvent elimination and hardening step has been performed includes a fuel flow path hermetically joined with ceramic adhesive, and a generating chamber 10 housing fuel cells 16, and is a high temperature section assembly which rises in temperature to a comparable temperature to that of fuel cells 16, even during the electrical generation operation of solid oxide fuel cell apparatus 1. Details of the solvent elimination and hardening step (Fig. 24, step S15) are described below.

0121 Note that in the solvent elimination and hardening step of this embodiment, sufficient time is spent passing through a similar temperature band to that of the workable hardening step during the temperature rise to the electrical generation operation temperature. During this period, ceramic adhesive layer 120a around exhaust collection chamber 18 and ceramic adhesive layer 120b at the center of exhaust collection chamber 18 are hardened. At this point, large diameter seal 19a disposed on top of ceramic adhesive layer 120a and small diameter seal 19b disposed on top of ceramic adhesive layer 120b prevent rapid evaporation of moisture from the surface of each of the ceramic adhesive layers. The occurrence of cracks in ceramic adhesive layers 120a, 120b can thus be suppressed, and airtightness of joining portions secured. Thus the joining portions between collection chamber upper member 18a and collector chamber lower member 18b, which are constituent parts of the fuel-guiding flow path, are hermetically sealed using ceramic adhesive. Note that each of the ceramic adhesive layers hardened in the workable hardening steps performed 3 times up to this point is again gradually heated, therefore residual moisture is vaporized and a more stable state obtained while avoiding the risk of cracking.

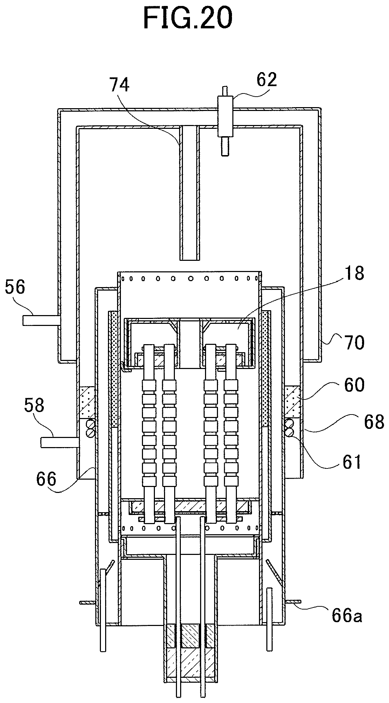

0122 Next, as shown in Fig. 20, an inside cylindrical vessel 68, which is an exhaust path constituent member, and outside cylindrical vessel 70, which is a supply path constituent member, are fit to the top of an assembly assembled up to Fig. 19. Inside cylindrical vessel 68 and outside cylindrical vessel 70 are attached to assembly, joined by welding. Also, exhaust gas discharge pipe 58 is attached to the outside wall surface bottom portion of inside cylindrical vessel 68, and oxidant gas injection pipe 74 is attached to the inside ceiling surface. In addition, the oxidant gas injection pipe 74 attached to inside cylindrical vessel 68 penetrates the opening portion at the center of the assembly exhaust collection chamber 18. An oxidant gas introducing pipe 56 is attached to the outside wall surface bottom portion of outside cylindrical vessel 70.

0123 Note that a step for fitting further constituent parts to an assembly which has passed through the solvent elimination and hardening step in Fig. 24, step S15 is implemented as a second fitting step.

An ignition heater 62 is attached to inside cylindrical vessel 68 and outside cylindrical vessel 70 so as to penetrate same. By placing inside cylindrical vessel 68 on the assembly, an exhaust gas discharge flow path 21 (Fig. 2) is formed between the outer circumferential surface of outside cylindrical member 66 and the inner circumferential surface of inside cylindrical vessel 68. A combustion catalyst 60 and a sheath heater 61 are attached to the inside of inside cylindrical vessel 68 so as to be positioned on the bottom end portion of this exhaust gas discharge flow path 21. Thus constituent parts unable to withstand the second temperature in the solvent elimination and hardening step, such as the ignition heater 62, combustion catalyst 60, and sheath heater 61, are assembled in the second fitting step performed after the solvent elimination and hardening step. Therefore an assembly which is fit to the outside of a high temperature section assembly which has passed through the solvent elimination and hardening step in step S15, and which includes constituent parts unable to withstand the second temperature, is a low temperature section assembly. The low temperature section assembly comprises an oxidant gas supply flow path 22, and is joined using ceramic adhesive to the high temperature section assembly. The low temperature section assembly part does not rise to a temperature comparable to the fuel cells 16, even during an electrical generation operation of solid oxide fuel cell apparatus 1.

0124 Note that the present invention can also be constituted so that inside cylindrical vessel 68 and outside cylindrical vessel 70 are adhered using ceramic adhesive. In such cases, ceramic adhesive is filled into the ring-shaped gap between inside cylindrical vessel 68 and outside cylindrical vessel 70, hermetically affixing these members. Alternatively, the invention can also be configured by constituting these members so that the gap between the inside cylindrical vessel and the outside cylindrical vessel is elliptical, and ceramic adhesive is filled into this elliptical gap, thereby hermetically sealing the members.

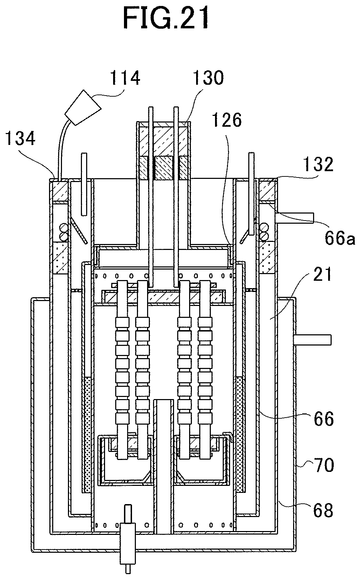

0125 As shown in Fig. 21, the top and bottom of the assembly covered with inside cylindrical vessel 68 and outside cylindrical vessel 70 are once again inverted. Here, a ring-shaped shelf member 66a is welded to the outer wall surface bottom portion of outside cylindrical member 66 (the top portion in Fig. 21), and this shelf member 66a closes off the ring-shaped gap between the outer circumference surface of outside cylindrical member 66 and the inner circumferential surface of inside cylindrical vessel 68. As an adhesive application step, ceramic adhesive is filled using adhesive injection apparatus 114 into the ring-shaped space surrounded by the outer circumferential surface of this outside cylindrical member 66, the inner circumferential surface of inside cylindrical vessel 68, and shelf member 66a (Fig. 24, step S17). Note that the step in which ceramic adhesive is adhered to constituent parts assembled in the second fitting step after the solvent elimination and hardening step is implemented as the second adhesive application step. As a variant example, the outside cylindrical member and inside cylindrical member can be constituted so that the gap between the outside cylindrical member and inside cylindrical member into which ceramic adhesive is filled assumes an elliptical shape.

0126 An exhaust pathway seal 134, being a ring-shaped thin plate, is disposed to cover filled-in ceramic adhesive layer 132. This exhaust pathway seal 134 functions as a cover member for suppressing the occurrence of cracks when the ceramic adhesive is hardening. In this state, the assembly is placed inside drying oven 116 (not shown in Fig. 21) and the workable hardening step (Fig. 24, step S18) and solvent elimination and hardening step (Fig. 24, step S19) are implemented a fourth time. Note that the workable hardening step and solvent elimination and hardening step, in which ceramic adhesive applied in the second adhesive application step are dried and hardened, is implemented as the second drying and hardening step. In addition, ceramic adhesive applied in the second adhesive application step is used to join parts not rising to temperatures comparable to that of fuel cells 16 in the electrical generation operation of solid oxide fuel cell apparatus 1.

0127 In the workable hardening step of this second drying and hardening step, as shown in Fig. 26, the temperature inside drying oven 116 is raised from room temperature to approximately 60°C over approximately 120 minutes by heating control device 116a, following which it is raised to approximately 80°C over approximately 20 minutes, then maintained at approximately 80°C for approximately 60 minutes. After maintaining a temperature of approximately 80°C, the temperature inside drying oven 116 is raised to a predetermined third temperature of approximately 150°C over approximately 70 minutes as a solvent elimination and hardening step in the second drying and hardening step, as shown by the dotted line in Fig. 26. After maintaining the temperature at approximately 150°C over approximately 60 minutes, the temperature is then returned over approximately 60 minutes to room temperature. This third temperature is higher than the first temperature of the workable hardening step and lower than the temperature of the fuel cells 16 in the electrical generation operation, which is the second temperature, and is set at a temperature withstandable by the constituent parts fit in the second fitting step.

0128 I.e., by implementing a fourth workable hardening step, the newly filled ceramic adhesive layer 132 is heated and hardened, and outside cylindrical member 66 and inside cylindrical vessel 68 are hermetically adhered. Thus outside cylindrical member 66 and inside cylindrical vessel 68, which are constituent parts of the flow path for guiding exhaust gas, are hermetically adhered using ceramic adhesive. Here the action of exhaust pathway seal 134 and the effect brought about by ring-shaped ceramic adhesive layer 132 are similar to the dispersion chamber seal 126 and ceramic adhesive layer 124 described above.

0129 The workable hardening step on the joining portions between outside cylindrical member 66 and inside cylindrical vessel 68 is for securing the airtightness of the exhaust gas discharge flow path 21 which guides exhaust; even if for some reason airtightness is compromised, the adverse effects will be less than if the airtightness of joining portions of fuel cells 16 is compromised. Moreover, the joining portion between outside cylindrical member 66 and inside cylindrical vessel 68 is positioned on the downstream side of the combustion catalyst 60 in exhaust gas discharge flow path 21. Therefore even if by some chance a leak occurs in this joining portion, the leaking gas will be exhaust gas, purified by combustion catalyst 60, and the negative effect thereof will be extremely small. Note that the joining portion does not rise to a temperature comparable to the fuel cells 16, even during an electrical generation operation of solid oxide fuel cell apparatus 1.

0130 Following implementation of the 4th workable hardening step, which is the last workable hardening step, a solvent elimination and hardening step is implemented (Fig. 24, step S19). In the solvent elimination and hardening step, a dehydration and condensing reaction is performed by the workable hardening step; residual moisture is further evaporated from the fully hardened ceramic adhesive, and drying is effected to a state capable of withstanding the temperature rise in the startup step of solid oxide fuel cell apparatus 1. In this embodiment, the solvent elimination and hardening step in Fig. 24, step S19 is carried out using a temperature of approximately 150°C, maintained for approximately 180 minutes, inside drying oven 116. By performing the solvent elimination and hardening step at a higher temperature than the workable hardening step, the ceramic adhesive layer can be dried in a short time to a state capable of withstanding the temperature rise of the startup step.

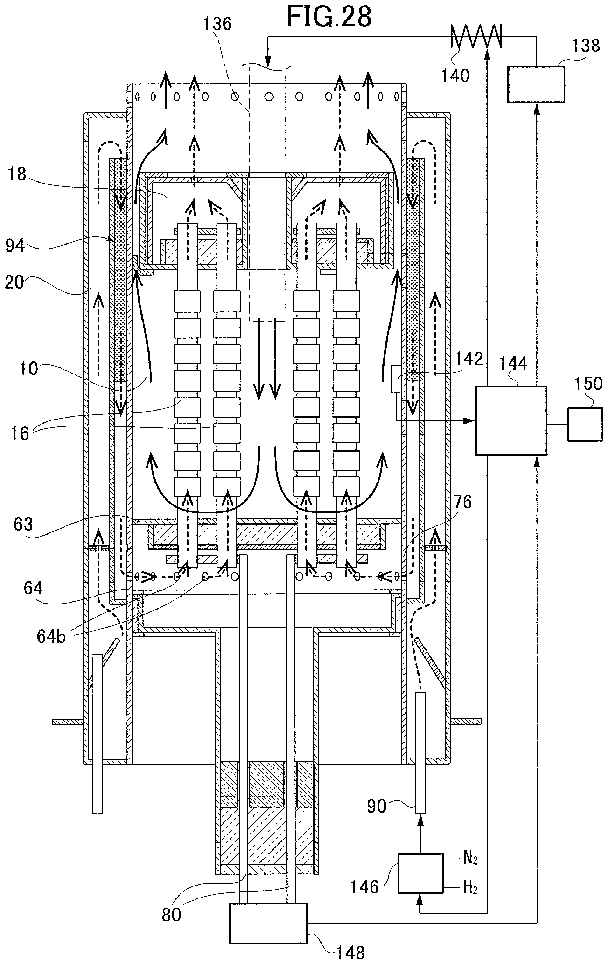

0131 Next, referring to Figs. 28 through 30, we explain the solvent elimination and hardening step and inspection in Fig. 24, step S15.

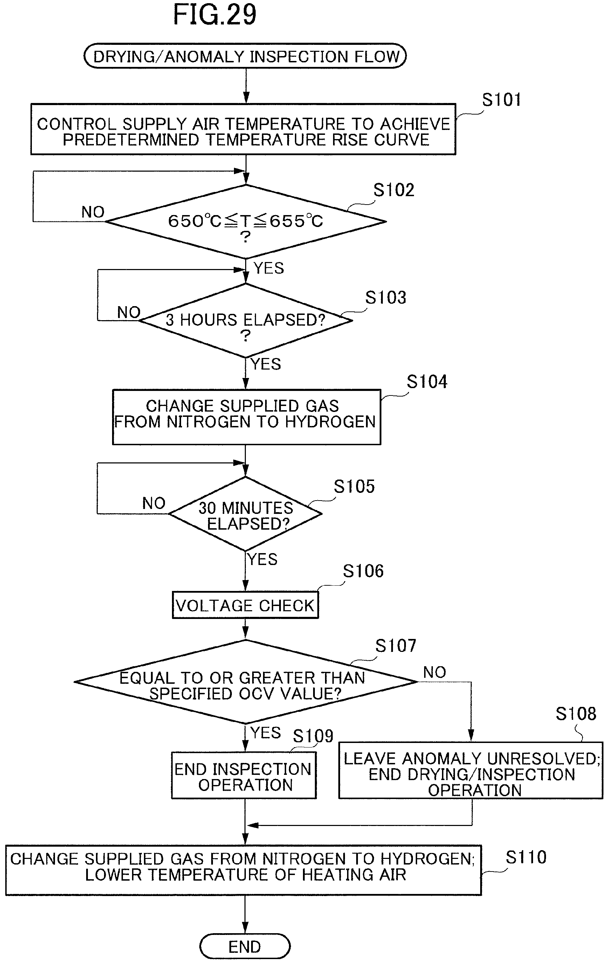

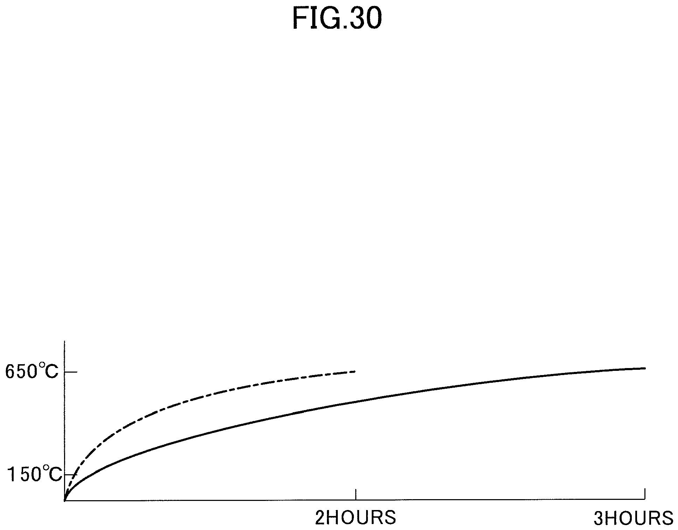

Fig. 28 explains the heating method in the solvent elimination and hardening step. Fig. 29 is flow chart of the procedures for the solvent elimination and hardening step and inspection. Fig. 30 is a diagram showing the heating state in the solvent elimination and hardening step.

0132 In the solvent elimination and hardening step, the entire assembly is not heated inside a drying oven; rather the space inside generating chamber 10 and the fuel cells 16 are heated by feeding heated air into generating chamber 10. Note that because the assembly is positioned inside the drying chamber during the solvent elimination and hardening step, the assembly is also heated by the filling of the drying chamber with high temperature air which has been fed into generating chamber 10 and flows out therefrom. As shown in Fig. 28, in the solvent elimination and hardening step, heated air introducing pipe 136 is inserted into generating chamber 10 through an opening at the center of exhaust collection chamber 18. A blower 138 and a heater 140 for heating air fed from blower 138 are connected to heated air introducing pipe 136. Air heated by heater 140 is introduced into generating chamber 10 via heated air introducing pipe 136. A temperature sensor 142 is installed inside generating chamber 10, and measured temperatures are input to heating control device 144. Heating control device 144 controls blower 138 and heater 140 based on the signal detected by temperature sensor 142.

0133 As depicted by the solid arrow in Fig. 28, introduced air heats each of the fuel cells 16 in generating chamber 10, then passes through the gap between the outer circumference of exhaust collection chamber 18 and the inner wall surface of inside cylindrical member 64 and flows out to the exterior of the assembly. By this means the ceramic adhesive layers in the joining portions between fuel cells 16 and first affixing member 63, the joining portions between collector chamber lower member 18b and fuel cells 16, the joining portions between collection chamber upper member 18a and collector chamber lower member 18b, and the joining portions between dispersion chamber bottom member 72 and inside cylindrical member 64 are heated, and solvent remaining within the hardened ceramic adhesive is further vaporized.

0134 On the other hand, in the solvent elimination and hardening step, gas not containing oxygen is supplied from fuel gas supply pipe 90 in parallel with the introduction of heating air from heated air introducing pipe 136. A nitrogen/hydrogen supply device 146 is connected to the fuel gas supply pipe 90 on the assembly. This nitrogen/hydrogen supply device 146 is also connected to heating control device 144 and controlled thereby. As shown by the wavy arrow in Fig. 28, gas supplied from fuel gas supply pipes 90 rises to the top end inside reformer 20, then drops down inside reforming section 94 and passes through small hole 64b disposed on the bottom portion of inside cylindrical member 64 and flows into combustion gas dispersion chamber 76. Gas which has flowed into combustion gas dispersion chamber 76 passes through the inside (fuel electrode side) of each individual fuel cell 16 attached to first affixing member 63 on combustion gas dispersion chamber 76 and flows into exhaust collection chamber 18. Gas which has flowed into exhaust collection chamber 18 is injected from exhaust collection chamber 18 injection port 18d and flows out to the exterior of the assembly.

0135 In the invention thus constituted, nitrogen gas, which is an inert gas, and hydrogen gas are supplied as gases not containing oxygen. The introduced gas is heated so that each of the fuel cells 16 can also be heated from the inside. Oxidant gas (air) inside the fuel cells 16 and reforming section 94 can be discharged by thus introducing inert gas into each of the fuel cells 16. Oxidation of fuel electrodes in fuel cells 16 and oxidation of reforming section 94 when the temperature is raised to the electrical generation operation temperature can thereby be prevented. In the solvent elimination and hardening step, by supplying hydrogen gas from fuel gas supply pipe 90, hydrogen gas passes through each of the fuel cells 16 raised to a high temperature, so the fuel electrodes oxidized during the manufacturing process can be reduced. Note that in the solvent elimination and hardening step, inert gas is supplied up until the temperature of the fuel cells 16 has risen sufficiently; after the temperature has risen, the inert gas can be switched to hydrogen gas.

0136 In a state whereby oxidant gas is supplied to the air electrode side of fuel cells 16, hydrogen is supplied to the fuel electrode side thereof, and the temperature of each of the fuel cells 16 has risen sufficiently, a voltage is generated between the two bus bars 80 connected to fuel cells 16. A voltage detection circuit 148 is connected to bus bars 80, and signals detected by voltage detection circuit 148 are input to a heating control device 144. The status of each of the connecting portions of fuel cells 16 and the assembly can be determined by measuring the voltage between these bus bars 80. Measurement of the voltage is performed with no current flowing between the bus bars 80. If there is a problem with the fuel cells 16 themselves, the voltage generated between bus bars 80 drops. In the case of a major fuel leak at the joining portion between fuel cells 16 and first affixing member 63, or at the joining portion between fuel cells 16 and collector chamber lower member 18b, as well, the voltage drops due to the lack of sufficient supply of fuel gas to the fuel electrode. The voltage measured by voltage detection circuit 148 and the temperature measured by temperature sensor 142 are displayed on a display monitor 150 connected to heating control device 144. Thus in the solvent elimination and hardening step, reduction of the fuel electrodes in each of the fuel cells 16 can be performed simultaneously with inspection of a semi-finished solid oxide fuel cell apparatus 1.

0137 Next, referring to Figs. 29 through 30, we explain the sequence of the solvent elimination and hardening step.

First, in Fig. 29, step S101, heating control device 144 controls blower 138 and heater 140 so that the temperature of air supplied from blower 138 rises along a predetermined temperature rise curve. Heating control device 144 controls nitrogen/hydrogen supply device 146 to supply nitrogen gas to each of the fuel cells 16 through fuel gas supply pipe 90.

0138 Note that in this embodiment, heating control device 144 controls blower 138 and heater 140 so that the air temperature rise curve takes the form shown by the solid line in Fig. 30. As shown in Fig. 30, the temperature of supplied air is raised from room temperature to approximately 650°C over approximately 3 hours. The curve shown by a dot and dash line in Fig. 30 schematically depicts the temperature rise curve inside the generating chamber during the startup step of a completed solid oxide fuel cell apparatus 1. As shown in Fig. 30, in an actual startup step of solid oxide fuel cell apparatus 1, the generating chamber interior is caused to rise over approximately 2 hours to approximately 650°C, which is the temperature of the fuel cells 16 during an electrical generation operation. By comparison, a temperature rise to approximately 650°C is accomplished over approximately 3 hours in the solvent elimination and hardening step.

0139 By this gradual rise in temperature, residual solvent in the ceramic adhesive layer is heated and vaporized by a small amount at a time. Excessive cracking caused by rapid volumetric expansion and evaporation of the solvent is thus suppressed. In addition, the temperature of the ceramic adhesive layer in each part within generating chamber 10 is raised to the temperature prevailing during actual electrical generation operation. Thus a more reliable guarantee can be made that excessive cracking will not occur in the ceramic adhesive layer, even in cases where the temperature is suddenly raised in the actual startup step of a completed solid oxide fuel cell apparatus 1. Note that while moisture remains in each of the ceramic adhesive layers after completion of the solvent elimination and hardening step, the amount is minute, so no problems such as cracking arise even if the interior of the fuel cell module 2 (fuel cells 16) is raised up to the temperature during electrical generation operation.

0140 In Fig. 29, step S102, heating control device 144 judges whether the temperature detected by temperature sensor 142 is within the range of 650°C to 655°C. If not within the range of 650°C to 655°C, the processing in step S102 is repeated. If the detected temperature has risen to the range of 650°C to 655°C, the system advances to step S103; in step S103 a judgment is made of whether 3 hours have elapsed since the start of the solvent elimination and hardening step. If 3 hours have not elapsed, the step S103 processing is repeated.

0141 If 3 hours have elapsed, the system advances to step S104; in step S104, heating control device 144 controls nitrogen/hydrogen supply device 146 to switch over the gas supplied through fuel gas supply pipe 90 to hydrogen gas. By this means, hydrogen gas contacts the fuel electrodes on each of the fuel cells 16 which have risen to a high temperature, and the reduction reaction advances on the fuel electrodes, which had been oxidized during manufacturing.

0142 In step S105 a judgment is made as to whether 30 minutes have elapsed since switching the gas to hydrogen gas in step S104. If 30 minutes have not elapsed, the step S105 processing is repeated.

Next, in step S106, the voltage generated between the two bus bars 80 is detected using voltage detection circuit 148. Note that in the present embodiment the measurement of voltage is carried out with no current flowing between bus bars 80. In cases where large cracks form in the joining portions joined by ceramic adhesive, large leaks of hydrogen gas occur along the flow path. For this reason, if there are large leaks, the concentration of hydrogen gas supplied to the fuel electrodes of each of the fuel cells 16 drops, and the generated voltage is reduced. In addition, if the fuel electrodes of each of the fuel cells 16 are not sufficiently reduced, the generating capacity of each of the fuel cells 16 drops, therefore voltage drops. Thus leaks in the fuel supply pathway and/or the state of reduction of the fuel electrodes can be inspected using the voltage generated between bus bars 80.

0143 In step S107 a judgment is made of whether the voltage detected by voltage detection circuit 148 is greater than a predetermined voltage. If less than a predetermined voltage, the system advances to step S108, and the solvent elimination and hardening step is ended there due to the defect in the assembly. If the voltage is above a predetermined value, the system advances to step S109, and the product is judged good, ending the inspection operation.

Next, in step S110, heating control device 144 controls nitrogen/hydrogen supply device 146 to switch over the gas supplied through fuel gas supply pipe 90 from hydrogen gas to nitrogen gas. Also, heating control device 144 controls blower 138 and heater 140 to reduce the temperature of the air supplied through heated air introducing pipe 136. Processing according to the flow chart shown in Fig. 29 is thus completed.

0144 In this manner, the assembly process can be simplified by carrying out the solvent elimination and hardening step in which the temperature inside generating chamber 10 is raised to approximately the temperature during the electrical generation operation (approximately 650 °C) after step S15 rather than at the end of the fitting step (after step S18 in Fig. 24). I.e., equipment such as combustion catalyst 60, ignition heater 62, sheath heater 61, and sensors, etc. are pre-attached to the inside cylindrical vessel 68 and outside cylindrical vessel 70 fitted in step S16, and this equipment can be attached in a single pass to the assembly at the same time as inside cylindrical vessel 68 and outside cylindrical vessel 70 are attached. However, this equipment is unable to withstand a temperature of approximately 650°C (in actual electrical generation operation of the solid oxide fuel cell apparatus 1, the locations where this equipment is attached do not rise in temperature to 650°C). Therefore after attachment of inside cylindrical vessel 68 and outside cylindrical vessel 70 is completed (after step S18 in Fig. 24), performing the solvent elimination and hardening step requires a subsequent separate installation, complicating the manufacturing process.

0145 In the manufacturing process above, the various parts are attached after completion of fuel cell holding vessel 8, thereby completing solid oxide fuel cell apparatus 1. The lower jig 110 (first positioning device), upper jig 112 (second positioning device), adhesive injection apparatus 114, drying oven 116 (adhesive hardening device), and heating control device 116a used in the manufacturing method for the solid oxide fuel cell apparatus 1 described above constitute apparatuses for manufacturing a solid oxide fuel cell apparatus.

0146 Using the solid oxide fuel cell apparatus 1 manufacturing method of an embodiment of the invention, multiple joining portions hardened by multiple workable hardening steps (steps S6, S8, S13 in Fig. 24) are dried simultaneously to a state capable of withstanding the temperature rise in the startup step up until the start of electrical generation (Fig. 24, step S15), therefore constituent parts can be hermetically joined while shortening the time required for manufacture. In addition, in the solvent elimination and hardening step (Fig. 24, step S15), the temperature is raised to a second temperature (650°C), which is essentially equal to the temperature of the fuel cells 16 during an electrical generation operation of a completed solid oxide fuel cell apparatus 1, and higher than the first temperature (80°C) at which the workable hardening step is performed. By this means, the risk of excessive cracking in the ceramic adhesive layer during the actual startup step can be reliably avoided.

0147 Also, using the solid oxide fuel cell apparatus 1 manufacturing method of the present embodiment, inside cylindrical vessel 68 and outside cylindrical vessel 70, etc. are installed in a second fitting step (Fig. 20) as further constituent parts onto fuel cell module 2 assembly, for which the solvent elimination and hardening step has been completed (Fig. 24, step S15), and fitted constituent parts are affixed with ceramic adhesive in a second adhesive application step (Fig. 21) and a second drying and hardening step (Fig. 24, steps S18, S19). In the second drying and hardening step, the temperature was raised to a predetermined third temperature (150°C), which is below the second temperature (650°C), thereby permitting the fitting of constituent parts unable to withstand the second temperature in the second fitting step (sheath heater 61, ignition heater 62, etc.). Thus in the solvent elimination and hardening step (Fig. 24, step S15), the assembly of parts with low heat resistance can also be completed using ceramic adhesive, thereby shortening the manufacturing process, while sufficiently securing airtightness in joining portions of constituent parts.

0148 Moreover, using the method for manufacturing a solid oxide fuel cell apparatus 1 of the embodiment, the ceramic adhesive layer 132 adhered in the second adhesive application step (Fig. 21) is not exposed to the temperatures of electrical generation operation. Therefore the occurrence of excessive cracking in the ceramic adhesive layer can be reliably avoided in the actual startup step, even if ceramic adhesive hardened in the second drying and hardening step (Fig. 24, steps S18, S19) is not raised to the second temperature (650°C).

0149 Also, using the method of the present embodiment for manufacturing a solid oxide fuel cell apparatus 1, the ceramic adhesive layer 132 applied in the second adhesive application step (Fig. 21) is used in the joining portion on the downstream side of combustion catalyst 60, therefore even if by some chance excessive cracking occurs, there will be no leaking of toxic exhaust gas to the outside.

0150 In addition, using the method of the present embodiment for manufacturing a solid oxide fuel cell apparatus 1, a gas not containing oxygen is supplied (Fig. 29, steps S101, S104, S110) to the flow path for guiding fuel during the solvent elimination and hardening step (Fig. 24, step S15; Fig. 29), resulting in the filling on the fuel electrode side of fuel cells 16 with a gas not containing oxygen, therefore oxidation of the fuel electrodes can be prevented while performing the solvent elimination and hardening step at a high temperature.

0151 Also, using the method of the present embodiment for manufacturing a solid oxide fuel cell apparatus 1, the solvent elimination and hardening step (Fig. 24, step S15; Fig. 29) is carried out at approximately the same temperature (Fig. 30; 650°C) as that of the electrical generation operation, and hydrogen is supplied to fuel cells 16, thereby yielding a state in which fuel cells 16 can generate electricity. For this reason, leaks inside the fuel cell module 2 and the state of reduction of the individual fuel cell fuel electrodes can be inspected (Fig. 29, step S107) simply by measuring the electromotive force generated in fuel cells 16 (Fig. 29, step S106).

0152 Also, using solid oxide fuel cell module 2 of this embodiment of the invention, reformer 20, from which high airtightness is required, is provided in the inner high temperature section assembly (Fig. 19), therefore the ceramic adhesive can be dried and hardened at a high temperature with the high temperature section assembly in an assembled state (Fig. 24, step S15; Fig. 29). On the other hand, constituent parts unable to withstand high temperatures (sheath heater 61, ignition heater 62, etc.) are included in the outside low temperature section assembly (inside cylindrical vessel 68, outside cylindrical vessel 70, etc.), therefore the low temperature section assembly can be fitted on the outside of the assembled high temperature section assembly, and the ceramic adhesive can be dried and hardened at a low temperature (Fig. 24, step S19; 150°C), thereby protecting the constituent parts vulnerable to high temperatures from heat.

0153 Furthermore, using solid oxide solid oxide fuel cell module 2 of the present embodiment, the low temperature section assembly comprises an oxidant gas supply flow path 22, and an exhaust flow path 21 is provided on the inside thereof, so exhaust flow path 21, which is prone to reach high temperatures, can be cooled with oxidant gas flowing in oxidant gas supply flow path 22. There is therefore no need to include the entire exhaust flow path 21 in the high temperature section assembly (Fig. 19), and design freedom can be expanded.

0154 Also, using solid oxide fuel cell module 2 of the present embodiment, a catalyst heater 61 for heating combustion catalyst 60 is included in the low temperature section assembly (inside cylindrical vessel 68, outside cylindrical vessel 70, etc.), therefore exhaust flow path 21 comprising catalyst heater 61 can be assembled using ceramic adhesive layer 132.

0155 We have described above a preferred embodiment of the present invention, but various changes may be made to the above-described embodiment. Note that in the adhesive embodiments, in the solvent elimination and hardening step of Fig.24, step S15 the temperature of the assembly was raised to the temperature during electrical generation operation, but a separate workable hardening step may also be implemented prior to this step.

### Explanation of Reference Numerals

0156
1: solid oxide fuel cell apparatus
2: fuel cell module
4: auxiliary unit
7: thermal insulation
8: fuel cell holding vessel
10: generating chamber
16: fuel cells
16a: single cell
18: exhaust collection chamber
18a: collection chamber upper member
18b: collector chamber lower member (second affixing member)
18c: insertion holes
18d: injection port
18e: adhesive filling frame
19a: large diameter seal
19b: small diameter seal
19c: cover member
20: fuel gas supply flow path (fuel flow path)
21: exhaust gas discharge flow path (exhaust flow path)
22: oxidant gas supply flow path
24: water supply source
26: pure water tank
28: water flow volume regulator unit (water supply apparatus)
30: fuel supply source
34: heat exchanger
35: electromagnetic valve
36: desulfurizer
38: fuel flow regulator unit (fuel supply apparatus)
40: air supply source
45: air flow regulator unit (oxidant gas supply apparatus, air blower)
50: hot water producing device
54: inverter
56: oxidant gas introducing pipe (oxidant gas inflow port)
58: exhaust gas discharge pipe (exhaust gas outflow port)
60: combustion catalyst
61: sheath heater (catalyst heater)
62: ignition heater
63: first affixing member (dispersion chamber-forming plate)
63a: insertion holes
63b: adhesive filling frame
64: inside cylindrical member (generating chamber-forming member)
64a: small holes
64b: small holes
64c: stays (positioning members)
64d: shelf member
65: intermediate cylindrical member
66: outside cylindrical member
66a: shelf member
67: cover member
68: inside cylindrical vessel (exhaust passageway constituent member)
70: outside cylindrical vessel (supply passageway constituent member)
72: dispersion chamber bottom member
72a: insertion pipe
72b: thermal insulation
72c: flange portion
74: oxidant gas injection pipe
76: combustion gas dispersion chamber
78: insulator
80: bus bars
82: current collector
86: vaporization portion
86a: sloped plates
88: water supply pipe
90: fuel gas supply pipe
92: fuel gas supply flow path partition
92a: injection port
94: reforming section
96: reforming catalyst
97: porous support body
98: fuel electrode layer
99: reaction suppression layer
100: solid electrolyte layer
101: air electrode layer
102: interconnector layer
103a: electrode layer
103b: electrode layer
104a: lead film layer
104b: lead film layer
110: lower jig (first positioning device)
110a: positioning shaft
110b: base end surface
112: upper jig (second positioning device)
112a: truncated cones
114: adhesive injection apparatus (adhesive application apparatus)
116: drying oven (heating apparatus, drying and hardening apparatus)
116a: heating control device
118: ceramic adhesive layer
118a: projections
118b: hanging portion
120a: ceramic adhesive layer
120b: ceramic adhesive layer
122: ceramic adhesive layer
124: ceramic adhesive layer
126: dispersion chamber seal
128: ceramic adhesive layer
130: center seal plate
132: ceramic adhesive layer
134: exhaust passageway seal
136: heated air introducing pipe
138: blower
140: heater
142: temperature sensor
144: heating control device
146: nitrogen/hydrogen supply device
148: voltage detection circuit
150: display monitor

## Claims

1. A method for manufacturing a solid oxide fuel cell apparatus (1) in which fuel and oxidant gas are supplied to multiple fuel cells (16) housed within a fuel cell module (2) to generate electricity, comprising steps of:
an adhesive application step for applying ceramic adhesive between different parts of the solid oxide fuel cell apparatus so that an airtight flow path for guiding fuel or oxidant gas within the fuel cell module (2) is fabricated; and
a drying and hardening step for drying and hardening the applied ceramic adhesive;
wherein the drying and hardening step includes steps of:
a workable hardening step for hardening the applied ceramic adhesive at a predetermined first temperature; and
a solvent elimination and hardening step carried out after multiple repetitions of the adhesive application step and the workable hardening step;
wherein the solvent elimination and hardening step further removes solvent remaining within the ceramic adhesive hardened in each of the workable hardening steps to further harden the ceramic adhesive by raising to a second temperature, higher than the first temperature and approximately equal to the temperature of the fuel cells during electrical generation by the completed solid oxide fuel cell apparatus (1), and
the method further comprising steps of: a second fitting step for assembling additional parts of the solid oxide fuel cell apparatus to a fuel cell module assembly on which the solvent elimination and hardening step has been completed; a second adhesive application step for applying ceramic adhesive between different parts assembled in the second fitting step; and a second drying and hardening step for drying and hardening ceramic adhesive applied in the second adhesive application step; wherein the parts assembled in the second fitting step include at least one part unable to withstand the second temperature, and the second drying and hardening step is executed by raising the temperature to a predetermined third temperature lower than the second temperature.

2. The solid oxide fuel cell manufacturing method of Claim 1, wherein the ceramic adhesive applied in the second adhesive application step is used in joining portion not rising to the second temperature during the electrical generation operation of the completed solid oxide fuel cell apparatus (1).

3. The solid oxide fuel cell manufacturing method of Claim 1 or 2, wherein the fuel cell module (2) comprises a combustion catalyst (60) for purifying exhaust gas, and ceramic adhesive applied in the second adhesive application step is used in a joining portion for joining different parts forming a flow path for guiding exhaust gas in the fuel cell module (2) downstream from the combustion catalyst (60).

4. The solid oxide fuel cell manufacturing method of any of Claims 1-3, whereby in the solvent elimination and hardening step, a gas not containing oxygen is supplied to the flow path for guiding fuel in the fuel cell module (2).

5. The solid oxide fuel cell manufacturing method of any of Claims 1-4, wherein in the solvent elimination and hardening step, a hydrogen is supplied to the flow path for guiding fuel in the fuel cell module (2), and inspection of leaks in the flow path for guiding fuel in the fuel cell module (2), or inspection of the reduction state of a fuel electrode of the fuel cells (16), is made by measuring an electromotive force generated in the fuel cells (16).

6. A solid oxide fuel cell module (2) in which fuel and oxidant gas are supplied to multiple fuel cells (16) housed within the fuel cell module (2) to generate electricity, comprising:
a high temperature section assembly including the multiple fuel cells (16) and a generating chamber (10) housing the same, and a temperature of the high temperature section assembly rising to approximately the same temperature as the multiple fuel cells (16) during an electrical generation operation of the fuel cell module (2); and
a low temperature section assembly placed on the outside of the high temperature section assembly, and including constituent parts unable to withstand the temperature of the multiple fuel cells (16) during an electrical generation operation of the fuel cell module (2), and a temperature of the low temperature section assembly rising to a temperature below the temperature of the multiple fuel cells (16) during an electrical generation operation of the fuel cell module (2);
wherein the high temperature section assembly includes a fuel flow path comprised of constituent parts hermetically joined using ceramic adhesive; and
the low temperature section assembly is joined to the high temperature section assembly using ceramic adhesive; and
wherein a combustion catalyst (60) for purifying exhaust gas is provided in the exhaust flow path (21), and the low temperature section assembly includes a catalyst heater (61) for heating the combustion catalyst (60) as a constituent part unable to withstand the temperature of the multiple fuel cells (16) during the electrical generation operation of the fuel cell module (2).

7. The fuel cell module of Claim 6, further comprising an exhaust flow path (21) for guiding exhaust gas inside the fuel cell module (2), wherein the low temperature section assembly comprises an oxidant gas supply flow path (22) positioned on the outside of the exhaust flow path (21).

## Patentansprüche

1. Verfahren zum Herstellen eines Festoxidbrennstoffzellgerätes (1), in welchem Brennstoff und Oxidationsgas mehreren Brennstoffzellen (16) zugeführt werden, welche in einem Brennstoffzellmodul (2) angeordnet sind, um Elektrizität zu erzeugen, umfassend die Schritte:
einen Klebstoffauftragsschritt zum Auftragen eines keramischen Klebstoffes zwischen unterschiedlichen Teilen des Festoxidbrennstoffzellgerätes, so dass ein luftdichter Flusspfad zur Leitung von Brennstoff oder Oxidationsgas in dem Brennstoffzellmodul (2) hergestellt wird; und
einen Trocknungs- und Härtungsschritt zum Trocknen und Härten des aufgetragenen keramischen Klebstoffes;
wobei der Trocknungs- und Härtungsschritt die folgenden Schritte umfasst:
einen bearbeitungsfähigen Härtungsschritt zum Härten des aufgetragenen keramischen Klebstoffes bei einer vorbestimmten ersten Temperatur; und
einen Lösungsmitteleliminierungs- und Härtungsschritt, welcher nach mehrfacher Wiederholung des Klebstoffauftragsschritts und des bearbeitungsfähigen Härtungsschritts ausgeführt wird,
wobei der Lösungsmitteleliminierungs- und Härtungsschritt verbliebenes Lösungsmittel aus dem keramischen Klebstoff entfernt, welcher in jedem der bearbeitungsfähigen Härtungsschritte gehärtet wurde, um den keramischen Klebstoff durch Erhöhen auf eine zweite Temperatur weiter zu härten, welche höher als die erste Temperatur und ungefähr gleich der Temperatur der Brennstoffzellen während der Erzeugung von Elektrizität in dem fertiggestellten Festoxidbrennstoffzellgerät (1) ist, und
wobei das Verfahren weiterhin die folgenden Schritte umfasst: einen zweiten Montageschritt zum Zusammenbauen weiterer Teile des Festoxidbrennstoffzellgeräts zu einem Brennstoffzellmodulverband, an welchem der Ltisungsmitteleliminierungs- und Härtungsschritt abgeschlossen ist; einen zweiten Klebstoffauftragsschritt zum Auftragen von keramischem Klebstoff zwischen unterschiedlichen Teilen, weiche in dem zweiten Montageschritt zusammengebaut wurden; und einen zweiten Trocknungs- und Härtungsschritt zum Trocknen und Härten des keramischen Klebstoffs, welcher in dem zweiten Klebstoffauftragsschritt aufgetragen wurde; wobei die Teile, welche in dem zweiten Montageschritt zusammengebaut wurden, zumindest einen Teil umfassen, welcher der zweiten Temperatur nicht standhält, und wobei der zweite Trocknungs- und Härtungsschritt durch Erhöhen der Temperatur auf eine vorbestimmte dritte Temperatur durchgeführt wird, welche niedriger als die zweite Temperatur ist.

2. Verfahren nach Anspruch 1, wobei der keramische Klebstoff, welcher in dem zweiten Klebstoffauftragsschritt aufgetragen wird, benutzt wird, um Abschnitte zu verbinden, welche während der Erzeugung von Elektrizität nicht auf die zweite Temperatur des vollständig montierten Festoxidbrennstoffzellgeräts (1) gebracht werden.

3. Verfahren nach Anspruch 1 oder 2, wobei das Brennstoffzellmodul (2) einen Verbrennungskatalysator (60) zum Reinigen von Abgas umfasst, und wobei der keramische Klebstoff, welcher in dem zweiten Klebstoffauftragsschritt aufgetragen wurde, benutzt wird, in einem Verbindungsabschnitt zum Verbinden verschiedener Teile einen Flusspfad zum Leiten von Abgas in dem Brennstoffzellmodul (2) abströmseitig von dem Verbrennungskatalysator (60) zu bilden.

4. Verfahren nach einem der Ansprüche 1-3, wobei in dem Lösungsmitteleliminierungs- und Härtungsschritt dem Flusspfad zum Leiten des Brennstoffs in dem Brennstoffzellmodul (2) ein Gas zugeführt wird, welches keinen Sauerstoff enthält.

5. Verfahren nach einem der Ansprüche 1-4, wobei in dem Lösungsmittelellminierungs- und Härtungsschritt dem Flusspfad zum Leiten des Brennstoffs in dem Brennstoffzellmodul (2) Wasserstoff zugeführt wird, und wobei eine Inspektion von Lecks in dem Flusspfad zum Leiten des Brennstoffs in dem Brennstoffzellmodul (2), oder eine Inspektion des Reduktionszustandes einer Brennstoffelektrode in den Brennstoffzellen (16) durch Messen einer elektromotorischen Kraft erfolgt, welche in den Brennstoffzellen (16) erzeugt wird.

6. Festoxidbrennstoffzellmodul (2), in welchem Brennstoff und Oxidationsgas mehreren Brennstoffzellen (16) zugeführt wird, welche innerhalb des Brennstoffzellmoduls (2) angeordnet sind, um Elektrizität zu erzeugen, umfassend:
einen Hochtemperaturabschnittsverbund umfassend die mehreren Brennstoffzellen (16) und eine Erzeugungskammer (10), welche dieselben aufnimmt, und wobei eine Temperatur des Hochtemperaturabschnittsverbunds auf ungefähr die gleiche Temperatur wie die mehreren Brennstoffzellen (16) während des Elektrizitätserzeugungsbetriebs des Brennstoffzellmoduls (2) ansteigt; und
einen Niedrigtemperaturabschnittsverbund, welcher auf der Außenseite des Hochtemperaturabschnittsverbunds angeordnet ist, und welcher Bestandteile umfasst, welche den Temperaturen der mehreren Brennstoffzellen (16) während des Elektrizitätserzeugungsbetriebs des Brennstoffzellmoduls (2) nicht standhalten, und wobei eine Temperatur des Niedrigtemperaturabschnittsverbunds auf eine Temperatur unterhalb der Temperatur der mehreren Brennstoffzellen (16) während des ElelCtrizitätserzeugungsbetriebs des Brennstoffzellmoduls (2) ansteigt;
wobei der Hochtemperaturabschnittsverbund einen Brennstoffflusspfad umfasst, welcher aus Bestandteilen besteht, welche unter Verwendung von keramischem Klebstoff hermetisch miteinander verbunden sind; und
wobei der Niedrigtemperaturabschnittsverbund mit dem Hochtemperaturabschnittsverbund unter Verwendung eines keramischen Klebstoffs verbunden wird; und
wobei ein Verbrennungskatalysator (60) zum Reinigen von Abgas in dem Abgasflusspfad (21) vorgesehen ist, und wobei der Niedrigtemperaturabschnittsverbund einen Katalysatorheizer (61) zum Heizen des Verbrennungskatalysators (60) als einen Bestandteil umfasst, welcher der Temperatur der mehreren Brennstoffzellen (16) während des Elektrizitätserzeugungsbetriebs des Brennstoffzellmoduls (2) nicht standhält.

7. Brennstoffzellmodul nach Anspruch 6, weiterhin umfassend einen Abgasflusspfad (21) zum Leiten von Abgas innerhalb des Brennstoffzellmoduls (2), wobei der Niedrigtemperaturabschnittsverbund einen Oxidationsgaszufuhrflusspfad (22) umfasst, welcher an der Aul3enseite des Abgasflusspfads (21) angeordnet ist.

## Revendications

1. Procédé de fabrication d'un appareil de pile à combustible à oxyde solide (1) dans lequel du combustible et un gaz comburant sont fournis à de multiples piles à combustible (16) logées au sein d'un module de pile à combustible (2) pour générer de l'électricité, comprenant les étapes suivantes :
une étape d'application d'adhésif pour appliquer un adhésif céramique entre différentes parties de l'appareil de pile à combustible à oxyde solide pour qu'un chemin d'écoulement étanche à l'air pour guider le combustible ou le gaz comburant au sein du module de pile à combustible (2) soit fabriqué ; et
une étape de séchage et de durcissement pour sécher et durcir l'adhésif céramique appliqué ;
dans lequel l'étape de séchage et de durcissement inclut les étapes suivantes :
une étape de durcissement manipulable pour durcir l'adhésif céramique appliqué à une première température prédéterminée ; et
une étape d'élimination de solvant et de durcissement réalisée après de multiples répétitions de l'étape d'application d'adhésif et de l'étape de durcissement manipulable ;
dans lequel l'étape d'élimination de solvant et de durcissement élimine en outre le solvant restant au sein de l'adhésif céramique durci dans chacune des étapes de durcissement manipulables pour durcir plus encore l'adhésif céramique par une hausse à une deuxième température, plus élevée que la première température et approximativement égale à la température de piles à combustible pendant la génération d'électricité par l'appareil de pile à combustible à oxyde solide (1) achevé, et
le procédé comprenant en outre les étapes suivantes : une seconde étape de montage pour assembler des parties additionnelles de l'appareil de pile à combustible à oxyde solide sur un ensemble module de pile à combustible sur lequel l'étape d'élimination de solvant et de durcissement a été achevée ; une seconde étape d'application d'adhésif pour appliquer un adhésif céramique entre différentes parties assemblées dans la seconde étape de montage ; et une seconde étape de séchage et de durcissement pour sécher et durcir l'adhésif céramique appliqué dans la seconde étape d'application d'adhésif ; dans lequel les parties assemblées dans la seconde étape de montage incluent au moins une partie inapte à supporter la deuxième température, et la seconde étape de séchage et de durcissement est exécutée par la hausse de la température à une troisième température prédéterminée inférieure à la deuxième température.

2. Procédé de fabrication de pile à combustible à oxyde solide selon la revendication 1, dans lequel l'adhésif céramique appliqué dans la seconde étape d'application d'adhésif est utilisé dans une portion de jonction ne montant pas à la deuxième température pendant l'opération de génération d'électricité de l'appareil de pile à combustible à oxyde solide (1) achevé.

3. Procédé de fabrication de pile à combustible à oxyde solide selon la revendication 1 ou 2, dans lequel le module de pile à combustible (2) comprend un catalyseur de combustion (60) pour purifier un gaz d'échappement, et un adhésif céramique appliqué dans la seconde étape d'application d'adhésif est utilisé dans une portion de jonction pour joindre différentes parties formant un chemin d'écoulement pour guider un gaz d'échappement dans le module de pile à combustible (2) en aval du catalyseur de combustion (60).

4. Procédé de fabrication de pile à combustible à oxyde solide selon l'une quelconque des revendications 1 à 3, moyennant quoi dans l'étape d'élimination de solvant et de durcissement, un gaz ne contenant pas d'oxygène est fourni au chemin d'écoulement pour guider le combustible dans le module de pile à combustible (2).

5. Procédé de fabrication de pile à combustible à oxyde solide selon l'une quelconque des revendications 1 à 4, dans lequel dans l'étape d'élimination de solvant et de durcissement, de l'hydrogène est fourni au chemin d'écoulement pour guider le combustible dans le module de pile à combustible (2), et une inspection de fuites dans le chemin d'écoulement pour guider le combustible dans le module de pile à combustible (2), ou une inspection de l'état de réduction d'une électrode de combustible des piles à combustible (16), est réalisée par la mesure d'une force électromotrice générée dans les piles à combustible (16).

6. Module de pile à combustible à oxyde solide (2) dans lequel un combustible et un gaz comburant sont fournis à de multiples piles à combustible (16) logées au sein du module de pile à combustible (2) pour générer de l'électricité, comprenant :
un ensemble section à haute température incluant les multiples piles à combustible (16) et une chambre de génération (10) logeant celui-ci, et une température de l'ensemble section à haute température montant à approximativement la même température que les multiples piles à combustible (16) pendant une opération de génération d'électricité du module de pile à combustible (2) ; et
un ensemble section à basse température placé sur l'extérieur de l'ensemble section à haute température, et incluant des parties constitutives inaptes à supporter la température des multiples piles à combustible (16) pendant une opération de génération d'électricité du module de pile à combustible (2), et une température de l'ensemble section à basse température montant à une température en dessous de la température des multiples piles à combustible (16) pendant une opération de génération d'électricité du module de pile à combustible (2) ;
dans lequel l'ensemble section à haute température inclut un chemin d'écoulement de combustible composé de parties constitutives jointes hermétiquement à l'aide d'un adhésif céramique ; et
l'ensemble section à basse température est joint à l'ensemble section à haute température à l'aide d'un adhésif céramique ; et
dans lequel un catalyseur de combustion (60) pour purifier un gaz d'échappement est ménagé dans le chemin d'écoulement d'échappement (21), et l'ensemble section à basse température inclut un chauffage de catalyseur (61) pour chauffer le catalyseur de combustion (60) en tant que partie constitutive inapte à supporter la température des multiples piles à combustible (16) pendant l'opération de génération d'électricité du module de pile à combustible (2).

7. Module de pile à combustible selon la revendication 6, comprenant en outre un chemin d'écoulement d'échappement (21) pour guider un gaz d'échappement à l'intérieur du module de pile à combustible (2), dans lequel l'ensemble section à basse température comprend un chemin d'écoulement d'alimentation en gaz comburant (22) positionné sur l'extérieur du chemin d'écoulement d'échappement (21).
